# EUROPEAN PATENT SPECIFICATION

(11) **EP 4 573 868 B1**
(45) Date of publication and mention of the grant of the patent: **08.07.2026**
(21) Application number: 24217000.9
(22) Date of filing: 03.12.2024
(51) Int. Cl.: A01C 7/20

(54) **PLANTER ASSEMBLY**
EINZELKORNSÄMASCHINE
SEMOIR MONOGRAINE

(30) Priority: 18.12.2023 US 202318543077
(43) Date of publication of application: 25.06.2025
(60) Divisional application: 25219391.7
(73) Proprietor: Deere & Company, Moline, IL 61265 (US)
(72) Inventor: Garner, Elijah B., Mannheim (DE); Dhobale, Dnyanesh K., Mannheim (DE); Chakraborty, Gaurav, Mannheim (DE); Natarajan, Kamalakannan, Mannheim (DE); Harmon, Andrew W., Mannheim (DE); Kinney, Colter W., Mannheim (DE)
(74) Representative: Reichert, Christian

(56) References cited:
- EP-A1- 4 179 857
- AU-B2- 567 228
- US-A- 3 901 169
- US-A1- 2019 021 211
- US-A1- 2023 270 041

## Description

### Field of the Disclosure

The present disclosure relates to a linkage assembly, and more particularly to a linkage assembly that allows for ground following of a corresponding row unit.

### Background of the Disclosure

Planters often have a plurality of row units coupled to a toolbar and pulled behind a work machine. As the work machine travels along uneven surfaces, the row units may be positioned too far into, or away from, the underlying uneven surface due to the articulation of the components of the planter. There is a need for a row unit linkage assembly that alters the attitude of a corresponding row unit as the planter articulates with an uneven underlying surface.

For example, US 2023/0270041 A1 discloses an implement for working an agricultural field. The implement includes a frame and a plurality of row units carried by the frame. Each row unit includes a subframe trailing the frame and con-nected to the frame by an upper link and a lower link, at least two different ground-engaging tools carried by the sub-frame, and at least one pneumatic actuator configured to change a length of the upper link or the lower link to keep the ground-engaging tools in contact with ground. A method includes pulling the implement through the agricultural field, maintaining a selected pressure in the pneumatic actuator, and maintaining the ground-engaging tools in contact with the agricultural field.

Further, in AU 567 228 B2, a seed planter is disclosed. The seed planter is of the type including a tractor-drawn main frame, planter units mounted on the main frame, each with a tine on a trailing tine carrier arm with a pivoted connection for vertical movement to the main frame, and a press wheel in rear of the tine to determine the working depth of the tine. There is direct draught from the main frame through the tine carrier arm to the tine point, a bell crank is fulcrumed on the tine carrier arm with a trailing first arm and an upwardly extending second arm. The press wheel is carried by the trailing arm, and the upwardly extending arm is so connected by a link to the main frame as to vary the relative dispositions of press wheel and tine carrier arm, with rise and fall of the main frame, to maintain the working depth of the tine substantially constant.

In addition, EP 4 179 857 A1 discloses a row unit for depositing seeds in a furrow formed in soil. The row unit comprises a seed deposit assembly including a gage wheel and a disk. The gage wheel is configured to contact a top surface of the soil and the disk is configured to cut the furrow in the soil for receiving the deposited seeds. The row unit further includes a multi-bar linkage assembly operatively connected to the seed deposit assembly and a primary actuator operatively connected to the multi-bar linkage assembly. The primary actuator raises and lowers the seed deposit assembly relative to the soil and moves the disk into the soil to cut the furrow at a depth determined by the primary actuator and the gage wheel.

### Summary

The invention according to claim 1 defines a planter assembly that has a toolbar configured to be coupled to a work machine, a row unit configured to selectively open a trench, deposit a commodity therein, and close the trench as the planter assembly is moved along an underlying surface, and a linkage assembly coupling the row unit to the toolbar such that the row unit is movable relative to the toolbar. The linkage assembly alters a row unit attitude relative to the toolbar as the row unit moves relative thereto to enhance row unit ground following. The linkage assembly has a base bar pivotally coupled to the toolbar on one end and the row unit on an opposite end. According to the invention the linkage assembly further comprises a row unit bar pivotally coupled to the row unit on one end and an intermediate bar on an opposite end, and a toolbar bar pivotally coupled to the toolbar on one end and the intermediate bar on an opposite end. The intermediate bar is pivotally coupled to the base bar such that pivotal movement of the base bar relative to the toolbar causes the intermediate bar to engage the row unit bar and toolbar bar to alter the attitude of the row unit.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1a is a schematic side view of a conventional row unit coupled to a planter assembly and work machine;
Fig. 1b is a side view of the row unit and planter assembly of Fig. 1a as the work machine enters an uphill feature in the underlying surface;
Fig. 1c is a side view of the row unit and planter assembly of Fig. 1a as the work machine enters a downhill feature in the underlying surface;
Fig. 2a is a side view of one embodiment of a row unit coupled to a toolbar of a planter assembly on an even underlying surface;
Fig. 2b is a side view of the row unit and planter assembly of Fig. 2a as a work machine enters an uphill feature in the underlying surface;
Fig. 2c is a side view of the row unit and planter assembly of Fig. 2a as the work machine enters a downhill feature in the underlying surface;
Fig. 2d is an elevated perspective view of the row unit and planter assembly of Fig. 2a;
Fig. 2e is a side view of the row unit and planter assembly of Fig. 2a in a locally lowered location on the underlying surface;
Fig. 2f is a side view of the row unit and planter assembly of Fig. 2a in a locally raised location on the underlying surface;
Fig. 3a is a side view of one embodiment of a row unit coupled to a toolbar of a planter assembly;
Fig. 3b is a side view of the row unit and planter assembly of Fig. 3a as a work machine enters an uphill feature in the underlying surface;
Fig. 3c is a side view of the row unit and planter assembly of Fig. 3a as the work machine enters a downhill feature in the underlying surface;
Fig. 3d is an elevated perspective view of the row unit and planter assembly of Fig. 3a;
Fig. 3e is a side view of the row unit and planter assembly of Fig. 3a in a locally lowered location on the underlying surface;
Fig. 3f is a side view of the row unit and planter assembly of Fig. 3a in a locally raised location on the underlying surface;
Fig. 4a is a side view of one embodiment of a row unit coupled to a toolbar of a planter assembly;
Fig. 4b is a side view of the row unit and planter assembly of Fig. 4a as a work machine enters an uphill feature in the underlying surface;
Fig. 4c is a side view of the row unit and planter assembly of Fig. 4a as the work machine enters a downhill feature in the underlying surface;
Fig. 4d is an elevated perspective view of the row unit and planter assembly of Fig. 4a;
Fig. 4e is a side view of the row unit and planter assembly of Fig. 4a in a locally lowered location on the underlying surface;
Fig. 4f is a side view of the row unit and planter assembly of Fig. 4a in a locally raised location on the underlying surface;
Fig. 5a is a side view of one embodiment of a row unit coupled to a toolbar of a planter assembly;
Fig. 5b is a side view of the row unit and planter assembly of Fig. 5a as a work machine enters an uphill feature in the underlying surface;
Fig. 5c is a side view of the row unit and planter assembly of Fig. 5a as the work machine enters a downhill feature in the underlying surface;
Fig. 5d is an elevated perspective view of the row unit and planter assembly of Fig. 5a;
Fig. 5e is a side view of the row unit and planter assembly of Fig. 5a in a locally lowered location on the underlying surface;
Fig. 5f is a side view of the row unit and planter assembly of Fig. 5a in a locally raised location on the underlying surface;
Fig. 6a is a side view of one embodiment of a row unit coupled to a toolbar of a planter assembly;
Fig. 6b is a side view of the row unit and planter assembly of Fig. 6a as a work machine enters an uphill feature in the underlying surface;
Fig. 6c is a side view of the row unit and planter assembly of Fig. 6a as the work machine enters a downhill feature in the underlying surface;
Fig. 6d is an elevated perspective view of the row unit and planter assembly of Fig. 6a;
Fig. 6e is a side view of the row unit and planter assembly of Fig. 6a in a locally lowered location on the underlying surface;
Fig. 6f is a side view of the row unit and planter assembly of Fig. 6a in a locally raised location on the underlying surface;
Fig. 7a is a side view of one embodiment of a row unit coupled to a toolbar of a planter assembly;
Fig. 7b is a side view of the row unit and planter assembly of Fig. 7a as a work machine enters an uphill feature in the underlying surface;
Fig. 7c is a side view of the row unit and planter assembly of Fig. 7a as the work machine enters a downhill feature in the underlying surface;
Fig. 7d is an elevated perspective view of the row unit and planter assembly of Fig. 7a;
Fig. 7e is a side view of the row unit and planter assembly of Fig. 7a in a locally lowered location on the underlying surface;
Fig. 7f is a side view of the row unit and planter assembly of Fig. 7a in a locally raised location on the underlying surface;
Fig. 8a is a side view of one embodiment of a row unit coupled to a toolbar of a planter assembly;
Fig. 8b is a side view of the row unit and planter assembly of Fig. 8a as a work machine enters an uphill feature in the underlying surface;
Fig. 8c is a side view of the row unit and planter assembly of Fig. 8a as the work machine enters a downhill feature in the underlying surface;
Fig. 8d is an elevated perspective view of the row unit and planter assembly of Fig. 8a;
Fig. 8e is a side view of the row unit and planter assembly of Fig. 8a in a locally lowered location on the underlying surface;
Fig. 8f is a side view of the row unit and planter assembly of Fig. 8a in a locally raised location on the underlying surface;
Fig. 8g is a side view of the row unit and planter assembly of Fig. 8a in a transport configuration;
Fig. 9a is a side view of one embodiment of a row unit assembly coupled to a toolbar of a planter assembly; and
Fig. 9b is an elevated perspective view of the row unit assembly of Fig. 9a.

Corresponding reference numerals indicate corresponding parts throughout the several views.

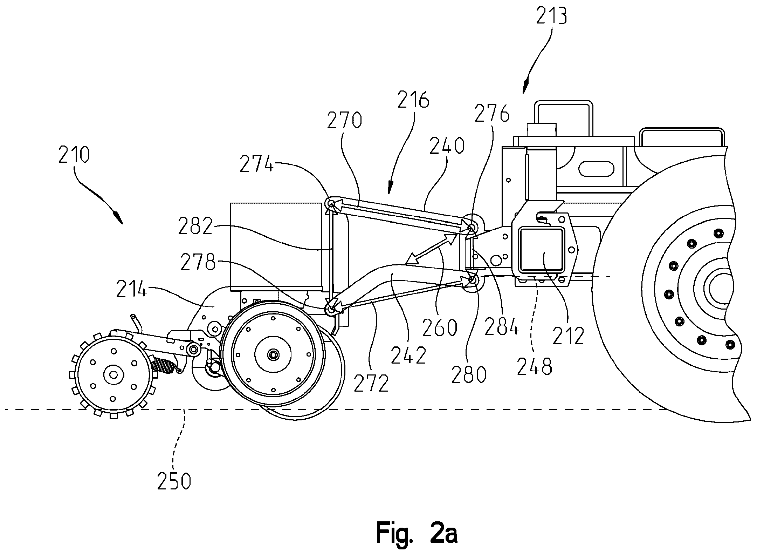

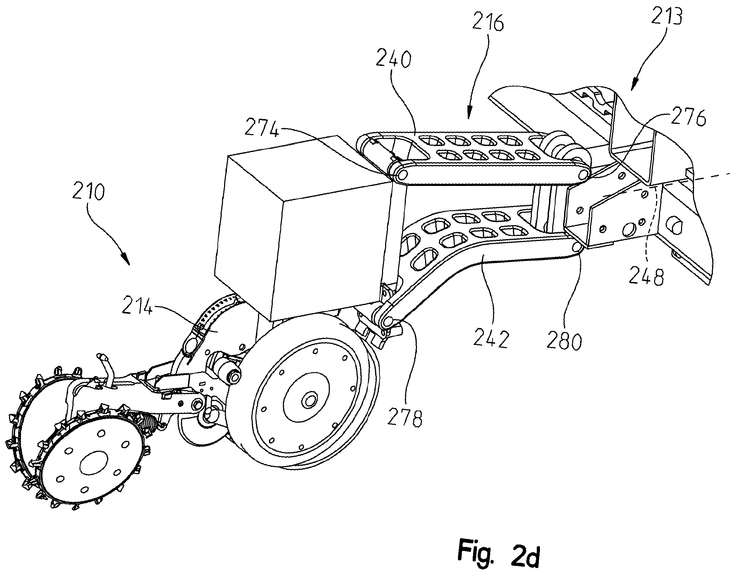

It is herewith mentioned, that figures 2a to 2f, 4a to 4f, 5a to 5f, 6a to 6f, 7a to 7f, 8a to 8g, 9a and 9b show embodiments which do not form part of the invention. The same applies to the embodiments described in the following description referring to said figures. All described embodiments referring to the said figures are described for exemplary reason only.

### Detailed Description

The embodiments of the present disclosure described below are not exhaustive and do not limit the disclosure to the precise forms in the following detailed description. Rather, the embodiments are chosen and described so that others skilled in the art may appreciate and understand the principles and practices of the present disclosure.

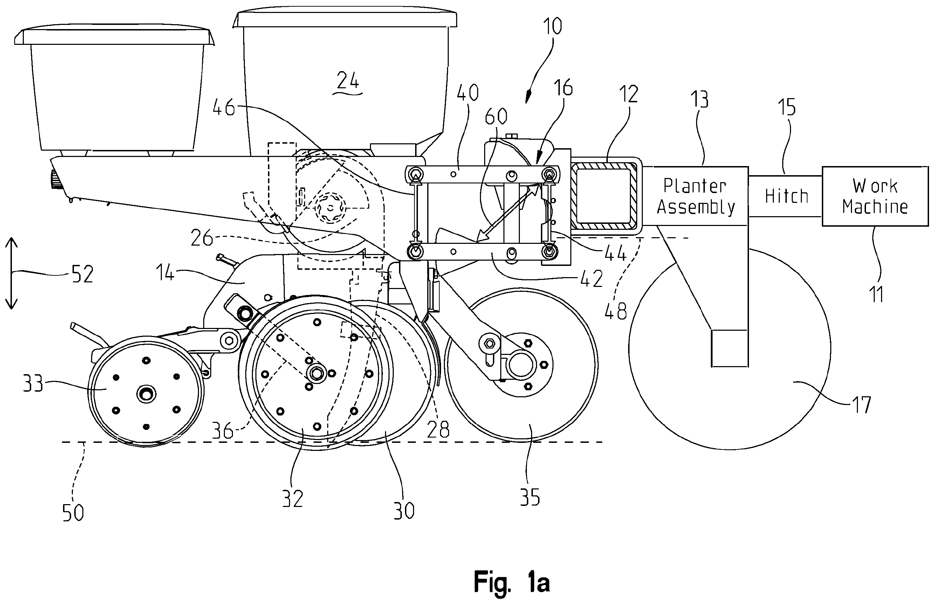

Fig. 1a illustrates a conventional planter row unit 10 mounted to transversely extending toolbar 12 of a planter assembly 13. The planter assembly may have a plurality of row units 10 mounted across the width of the toolbar 12. Further still, the planter assembly 13 may have multiple toolbars spaced from one another to provide a spaced configuration having row units 10 positioned across both a forward toolbar and a rearward toolbar. The planter assembly 13 may be coupled to a work machine 11 through a hitch 15 and have one or more wheels 17 positioned to substantially carry the weight of the planter assembly 13. The work machine 11 may be any known work machine 11 such as a tractor. The work machine 11 may have a power unit such as a gas, diesel, electric motor or a hybrid combination thereof that selectively distributes torque to move one or more wheel or track assembly. The hitch 15 may provide a location to couple the planter assembly 13 to a frame of the work machine 11 so the work machine 11 can selectively pull the planter assembly 13 along the underlying surface. The hitch 15 may have a single or multi-point coupling configuration. In an alternative embodiment, the row unit 10 may be coupled directly to a toolbar of the work machine without requiring a hitch 15.

Each embodiment of a row unit discussed herein may be coupled to a work machine in any of the configurations discussed herein. Accordingly, this disclosure will primarily illustrate and describe a single row unit configuration. However, this disclosure contemplates applying the disclosed embodiments discussed herein across a toolbar wherein there may be multiple row units having a substantially similar design as the described embodiment across the toolbar and possibly on forward or rearward toolbars along the assembly.

The row unit 10 is provided with a central frame member 14 coupled to the toolbar 12 by a parallelogram linkage assembly 16 to enable vertical relative movement between the row unit and the toolbar 12. Seed is stored in seed hopper 24 and provided to a seed meter 26. The seed meter singulates seed from a seed pool and drops the individual seeds through a seed tube 28 into a planting furrow. The furrow is formed in the soil by a disk furrow opener having at least one disk 30. Gauge wheels 32 control the depth of the furrow and are mounted to the frame member 14 by pivot arms 36. There is a gauge wheel adjacent the outer side of the opener disk 30. A closing wheel 33 is coupled to the frame member 14 and configured to close the furrow opened by the disk 30 after a seed or other commodity is placed therein. Optionally, one or more of a row cleaner or a coulter 35 may be coupled to the frame member 14 to be oriented along a leading portion of the row unit 10 to clear debris from the path of the opener disk 30 in use to ensure the opener disk 30 does not contact debris that prevents a furrow from being formed with the opener disk 30. However, in some embodiments contemplated herein there may be no row cleaner or coulter 35 at all.

The linkage assembly 16 has an upper link 40 and a lower link 42. Both the upper link 40 and the lower link 42 are pivotally coupled to the toolbar 12 on one end and to the frame member 14 and the row unit 10 on the other end. In the conventional linkage assembly 16, the upper and lower links 40, 42 may be pivotally coupled to the toolbar 12 at a toolbar pivot distance 44 on one end and the upper and lower links 40, 42 may be pivotally coupled to the frame member 14 of the row unit 10 at a row unit pivot distance 46 at the other end. In the conventional row unit 10, the toolbar pivot distance 44 and the row unit pivot distance 46 are substantially the same such that the upper link 40 and lower link 42 remain substantially parallel to one another as the row unit 10 moves relative to the toolbar 12.

In this arrangement, the toolbar 12 may be oriented along a planter plane 48 that is substantially controlled by the position of planter assembly 13 along an underlying surface relative to the work machine 11. More specifically, the one or more wheel 17 may contact the underlying surface to space the toolbar 12 of the planter assembly 13 from the underlying surface along the planter plane 48. In one aspect of this disclosure, the planter plane 48 may be controlled, in part, by the location of the work machine 11 relative to the at least one wheel 17. For example, the at least one wheel 17 may be a pivot point for the planter assembly 13 about which the planter plane 48 may rotate depending on the location of the work machine 11 relative to the at least one wheel 17. In one example, as the work machine 11 enters an uphill feature in the underlying surface the planter plane 48 may transition from the substantially horizontal configuration of Fig. 1a to an angled configuration relative to a level horizontal plane.

Similarly, the row unit 10 may be oriented along a row unit plane 50 defined by the frame member 14. The row unit plane 50 is the plane defined along a surface of the gauge wheel 32 and closing wheel 33 that are positioned to contact the underlying surface when properly positioned thereon during a planting operation. Ideally, the row unit plane 50 is substantially aligned with a plane of the underlying surface directly underneath the row unit 10 so the row unit 10 can distribute seed or other commodity in a furrow having a predictable depth and any remaining components of the row unit, such as a row cleaner or closing wheel, may be properly positioned along the underlying surface to executed their intended function.

In the conventional planter assembly 13, the linkage assembly 16 provides parallel upper and lower links 40, 42 that have substantially equally spaced pivot distances 44, 46 on the row unit 10 frame member 14 and the toolbar 12. In this configuration, the row unit plane 50 remains substantially parallel to the planter plane 48 as the row unit moves relative to the toolbar 12. More specifically, the linkage assembly 16 allows the row unit plane 50 to remain substantially parallel to the planter plane 48 as the row unit 10 travels in a substantially perpendicular direction 52 relative to the planter plane 48 as the row unit 10 encounters undulations or other non-planar changes to the underlying surface. The parallelogram linkage assembly 16 of the conventional row unit 10 provides for movement in the perpendicular direction 52 of the row unit 10 but substantially maintains the row unit plane 50 in a parallel orientation with the planter plane 48. In this configuration, as the planter assembly 13 travels over hills or valleys, the work machine 11 and wheel 17 become oriented along a portion of the hill or valley that is not planar with the portion of the hill or valley adjacent to the row unit 10. However, because the linkage assembly 16 is a parallelogram, some or all of the row unit 10 cannot remain in proper alignment with the underlying surface.

In one aspect of this disclosure, the linkage assembly 16 has a downforce actuator 60 that applies a springed force on the linkage assembly 16 to bias the row unit 10 towards the underlying surface. The downforce actuator 60 may extend from the toolbar on one end to a pivotal component of the linkage assembly 16 to apply the downforce to the row unit 10. The downforce actuator 60 may be a hydraulic actuator with an accumulator or the like, a pneumatic system providing a pressurized fluid to an actuator, a mechanical system having one or more spring, or any other known system that can apply a springed force to the linkage assembly 16 to bias the row unit 10 towards the underlying surface.

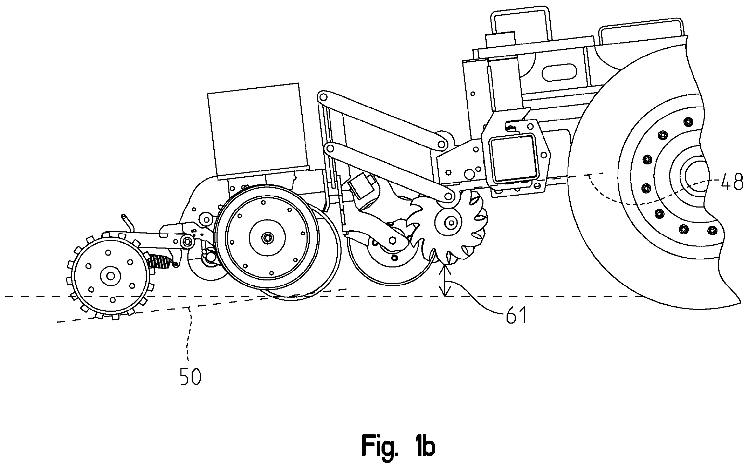

More specifically, Fig. 1b illustrates one embodiment wherein the work machine 11 is entering an uphill change in the underlying surface. As the work machine 11 enters the uphill change in the underlying surface, the planter plane 48 rotates as the work machine 11 rotates the toolbar 12 about the at least one wheel 17. As mentioned herein, the parallelogram linkage assembly 16 causes the row unit plane 50 to rotate in substantially the same way as the planter plane 48. However, because the row unit 10 is spaced behind the at least one wheel 17, there is a distance in which the work machine has entered the uphill change but the row unit 10 has not yet reach the uphill change. In this instance, which is illustrated in Fig. 1b, the row unit 10 is forced to become oriented in the row unit plane 50 that is parallel to the planter plane 48 even though the underlying surface is not similarly oriented. This causes one or more of driving the closing wheel 33 into the underlying surface and/or raising the row cleaner 35 among other components above the underlying surface by a row cleaner gap 61. Further, this rotation of the row unit plane 50 may cause the cutting disc to become spaced from, or driven into, the underlying surface to create a furrow having an undesirable depth. In other words, as the work machine 11 enters an uphill change in the underlying surface, the row unit 10 of Figs. 1a-1c will not typically maintain proper alignment with the underlying surface.

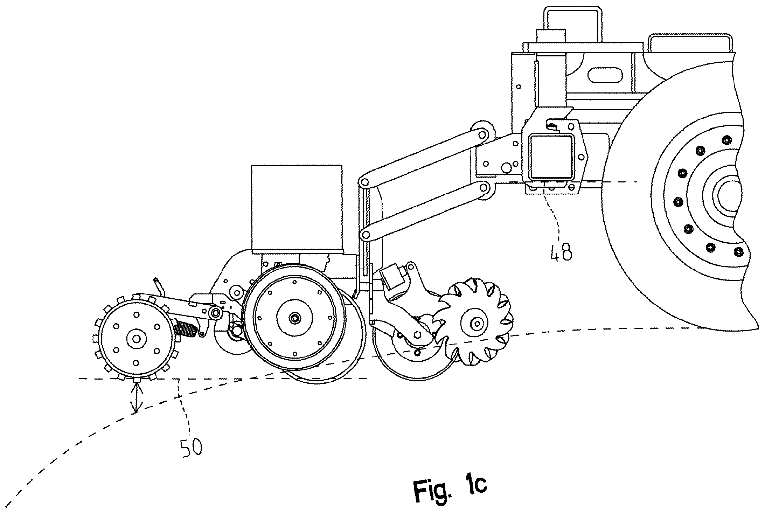

Similarly, the work machine 11 may encounter a downhill condition in the underlying surface wherein the work machine begins travelling downhill relative to the row unit 10 in a direction of travel. Fig. 1c represents an exemplary downhill condition wherein the work machine 11 begins travelling downhill relative to the row unit 10. As mentioned herein, the linkage assembly 16 will maintain a substantially parallel orientation of the row unit plane 50 with the planter plane 48. However, during the downhill condition of Fig. 1c the row unit 10 is not oriented along a similar underlying surface of the work machine 11 because the work machine 11 is entering the downhill condition. In this configuration, the parallelogram linkage assembly 16 forces the row unit 10 to rotate with the work machine 11 such that the row cleaner 35 and other components forward of the gauge wheel 32 of the row unit 10 may be driven into the underlying surface. Further, the closing wheel 33 may be forced to elevate above the underlying surface by a closing wheel gap 62 as the row unit plane 50 rotates with the planter plane 48.

In view thereof, the conventional row unit 10 and linkage assembly 16 may not properly track the underlying surface as the work machine 11 enters an uphill or downhill condition among other scenarios that may be common during a planting operation.

Referring now to Figs. 2a-2c, another embodiment of a row unit 210, not forming part of the invention, is illustrated. The row unit 210 has a linkage assembly 216 having an upper arm 240 with a length 270 that is different from a length 272 of a lower arm 242. Further, the upper arm 240 may be pivotally coupled to a frame member 214 of the row unit 210 on one end at a first pivot 274 and pivotally coupled to the toolbar 212 on an opposite end at a second pivot 276. Similarly, the lower arm 242 may be pivotally coupled to the frame member 214 on one end at a third pivot 278 and pivotally coupled to the toolbar 212 on an opposite end at a fourth pivot 280.

In one aspect of this disclosure, the linkage assembly 216 has a downforce actuator 260 that applies a springed force on the linkage assembly 216 to bias the row unit 210 towards the underlying surface. The downforce actuator 260 may extend from the toolbar 212 on one end to the lower arm 242 of the linkage assembly 216 to apply the downforce to the row unit 210. The downforce actuator 260 may be a hydraulic actuator with an accumulator or the like, a pneumatic system providing a pressurized fluid to an actuator, a mechanical system having one or more spring, or any other known system that can apply a springed force to the linkage assembly 216 to bias the row unit 210 towards the underlying surface.

A length 270 of the upper arm 240 may be the distance between the first pivot 274 and the second pivot 276. Similarly, a length 272 of the lower arm 242 may be the distance between the third pivot 278 and the fourth pivot 280. The first pivot 274 may also be spaced from the third pivot 278 along the frame member 214 of the row unit 210 by a row unit pivot distance 282. The second pivot 276 may also be spaced from the fourth pivot 280 along the toolbar 212 by a toolbar pivot distance 284. In one example of this embodiment, the row unit pivot distance 282 is greater than the toolbar pivot distance 284.

In one aspect of this disclosure, the lower arm 242 may have a bend formed therein. The bend may allow for clearance of components of the row unit 210 as the row unit 210 moves relative to the toolbar 212 as discussed herein. As noted above, the length 272 of the lower arm 242 discussed herein is the distance between pivots 278, 280 and the actual length of the lower arm 242 may be greater than the length 272 discussed herein due to the bend in the lower arm 242.

Further, the length 270 of the upper arm 240 may be different than the length 272 of the lower arm 242. Among other things, by altering the length 270 of the upper arm 240 relative to the length 272 of the lower arm 242, an attitude or a row unit plane 250 of the row unit 210 may be altered relative to the planter plane 248 as the planter assembly 213 traverses undulations in the underlying surface as discussed herein to enhance ground following and ensure the depth and shape of the furrow created by the row unit 210 remains substantially consistent as the row unit 210 traverses the underlying surface, among other things. Similarly, the row unit pivot distance 282 may be greater than the toolbar pivot distance 284.

This may correspond with the lengths 270, 272 of the upper and lower arms 240, 242 to ensure the attitude or row unit plane 250 is altered properly relative to the planter plane 248 to enhance ground following during uphill and downhill transitions of the planter assembly 213, among other things.

The specific geometries used for the lengths 270, 272 and pivot distances 282, 284 may be selected such that the attitude of the row unit plane 250 is altered relative to the planter plane 248 in a manner that is consistent with the geometries of the planter assembly 213 and the likely severity of changes in the underlying surface. In other words, if the row unit 210 is spaced significantly from the wheels 17, the geometries of the lengths 270, 272 and pivot distances 282, 284 may be different than if the row unit 210 is spaced relatively closer to the wheels 17. In other words, this disclosure contemplates selecting specific geometries for the lengths 270, 272 and pivot distances 282, 284 that are selected based on the specific geometries of the planter assembly 213.

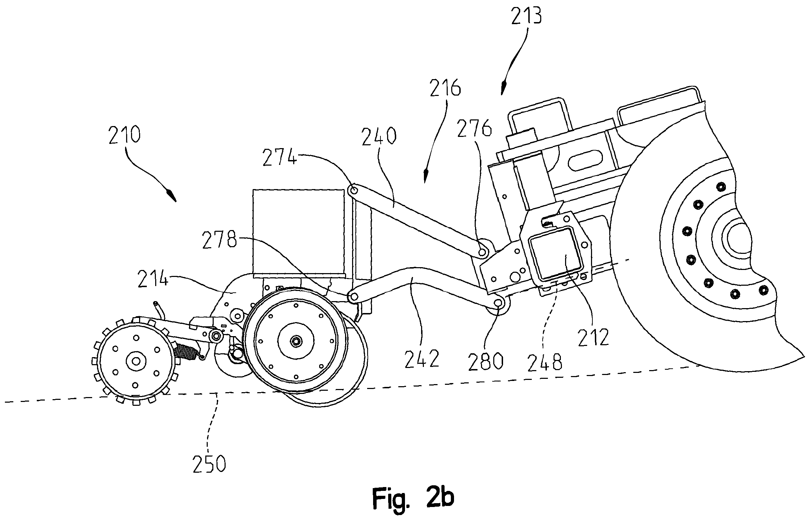

Fig. 2b illustrates a configuration wherein the work machine 11 begins travelling uphill. As the work machine 11 enters the uphill change in the underlying surface, the planter plane 248, which is defined along the toolbar 212, rotates with the work machine 11. However, the row unit 210 may not have entered the uphill feature in the underlying surface. Further, as the planter plane 248 rotates as the work machine enters the uphill feature, the row unit 210 must move relative to the toolbar 212 to avoid being driven into the underlying surface as the work machine 11 enters the uphill condition. The linkage assembly 216 may have corresponding lengths 270, 272 of the upper and lower arms 240, 242 that are coupled to the frame member 214 at the row unit pivot distance 282 and to the toolbar 212 at the toolbar pivot distance 284 such that the row unit 210 can both move relative to the toolbar 212 to avoid being driven into underlying surface and adjust the attitude or row unit plane 250 of the row unit 210 relative to the planter plane 248 to ensure the components of the row unit 210 remain properly aligned with the underlying surface.

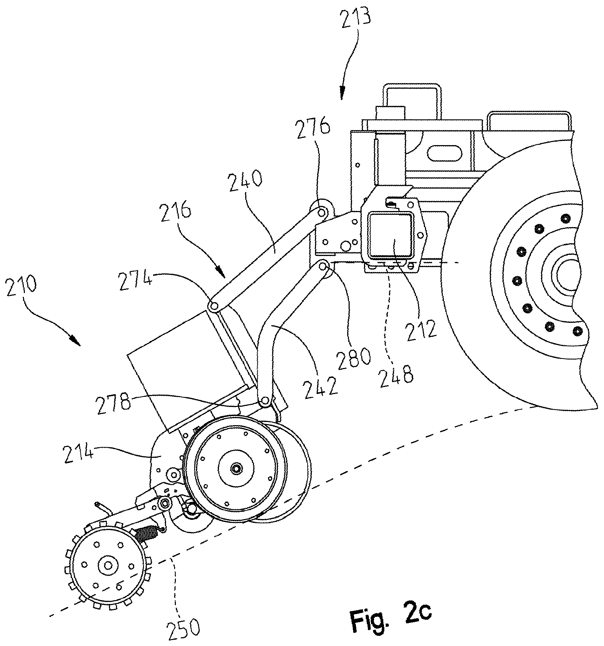

Referring now to Fig. 2c, a configuration wherein the work machine 11 begins travelling downhill is illustrated. As the work machine 11 enters the downhill change in the underlying surface, the planter plane 248, which is defined along the toolbar 212, rotates with the work machine 11. However, the row unit 210 may not yet have entered the downhill feature in the underlying surface. Further, as the planter plane 248 rotates as the work machine enters the downhill feature, the row unit 210 must move relative to the toolbar 212 to avoid being lifted above the underlying surface as the work machine 11 enters the downhill condition. The linkage assembly 216 may have corresponding lengths 270, 272 of the upper and lower arms 240, 242 that are coupled to the frame member 214 at the row unit pivot distance 282 and to the toolbar 212 at the toolbar pivot distance 284 such that the row unit 210 can both move relative to the toolbar to avoid being spaced from the underlying surface and adjust the attitude or row unit plane 250 of the row unit 210 relative to the planter plane 248 to ensure the components of the row unit 210 remain properly aligned with the underlying surface. In other words, the linkage assembly 216 discussed herein for Figs. 2a-2c allows the row unit 210 to move relative to the toolbar 212 so that the row unit 210 remains properly aligned with the underlying surface as the work machine enters and leaves an uphill feature or a downhill feature.

The specific lengths 270, 272 of the arms 240, 242 and the specific pivot locations 274, 276, 278, 280 and distances 282, 284 may be selected to allow the row unit 210 to respond to the changes in the underlying surface as desired. For example, the toolbar pivot distance 284 may be relatively decreased compared to the row unit pivot distance 282 to increase the change in the row unit plane 250 relative to planter plane 248 when the work machine 11 enters an uphill or leaves a downhill. In other words, the closer the row unit pivot distance 282 and toolbar pivot distance 284 are to being the same length, there will be a relatively less change in the attitude of the row unit plane 250 relative to the planter plane 248 when the work machine 11 enters an uphill or leaves a downhill. Similarly, the upper arm length 270 and lower arm length 272 may affect the change in attitude of the row unit plane 250 relative to the planter plane 248 when the work machine 11 enters a downhill or leaves an uphill. Accordingly, the relative lengths of the upper arm 240 and lower arm 242 may be selected to provide the desirable change in orientation of the row unit plane 250 relative to the planter plane 248 when the work machine 11 enters an uphill or leaves a downhill.

In one aspect of this disclosure, the specific lengths 270, 272 of the arms 240, 242 and the specific pivot locations 274, 276, 278, 280 and distances 282, 284 may be selected so the attitude of the row unit plane 250 of the row unit 210 is manipulated relative to the toolbar plane 212 so the row unit plane 250 substantially remains aligned with the underlying surface directly under the row unit 210 during likely changes to the underlying surface. That is to say, the specific geometries discussed herein may be selected to allow the row unit 210 to substantially follow the underlying surface in likely uphill or downhill changes. In other words, the geometries may be selected to account for the most likely changes expected in an agricultural field when executing a planting procedure.

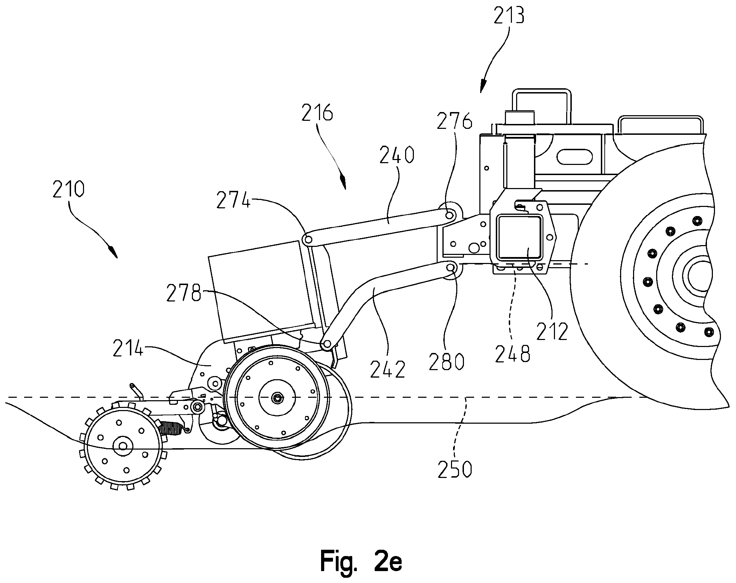

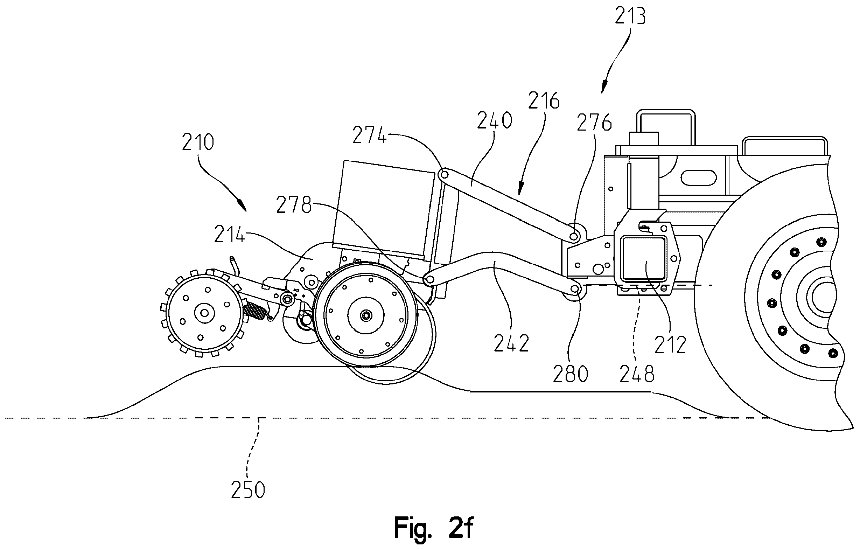

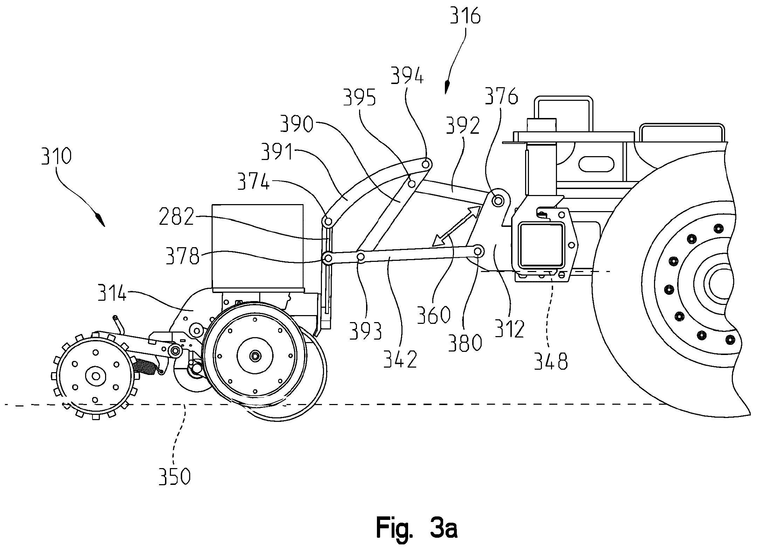

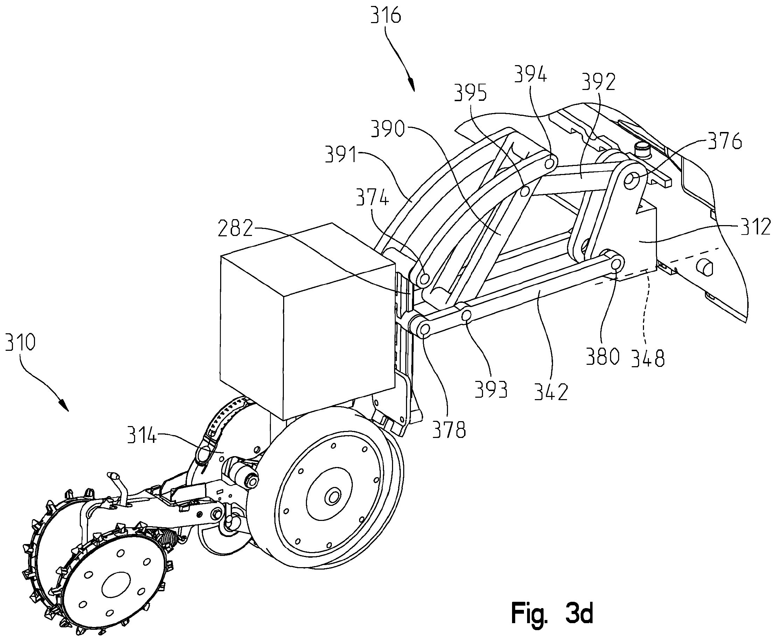

Figs. 2e and 2f illustrate situations wherein the row unit 210 is in a low spot relative to the toolbar 212 (Fig. 2e) and when the row unit 210 is in a high spot relative to the toolbar 212 (Fig. 2f). Relatively high and low spots in the underlying surface may be deviations in the underlying surface that are only along a focused section of the underlying surface and not consistent uphill or downhill changes. The linkage assembly 216 may respond as illustrated in Figs. 2e and 2f due to the specific lengths and pivot positions of the linkage assembly 216. Referring now to Figs. 3a-3f, another embodiment of a row unit 310 having a linkage assembly 316 is illustrated and forms part of the invention. The row unit 310 may have substantially the same components of the row units 210, discussed herein. Further, the components of the row unit 310 may be coupled to a frame member 314. Accordingly, the orientation of the frame member 314 affects the positioning of the components of the row unit 310 coupled thereto. The linkage assembly 316 movably couples the row unit 310 to a toolbar 312 that couples the row unit 310 to the planter assembly 13 and the work machine 11. The linkage assembly 316 may comprise a plurality of bars that are pivotally coupled to one another between first and third pivots 374, 378 of the frame member 314 and second and fourth pivots 376, 380 of the toolbar 312. More specifically, a base bar 342 may extend from the third pivot 378 of the frame member 314 to the fourth pivot 380 of the toolbar 312.

In one aspect of this disclosure, the linkage assembly 316 has a downforce actuator 360 that applies a springed force on the linkage assembly 316 to bias the row unit 310 towards the underlying surface. The downforce actuator 360 may extend from the toolbar 312 on one end to the base bar 342 of the linkage assembly 316 to apply the downforce to the row unit 310. The downforce actuator 360 may be a hydraulic actuator with an accumulator or the like, a pneumatic system providing a pressurized fluid to an actuator, a mechanical system having one or more spring, or any other known system that can apply a springed force to the linkage assembly 316 to bias the row unit 310 towards the underlying surface.

An intermediate bar 390 may be pivotally coupled to the base bar 342 at an intermediate pivot 393 at a location between the third pivot 378 and the fourth pivot 380 of the base bar 342 and extend generally upward at an angle therefrom. A row unit bar 391 may extend from the first pivot 374 and be pivotally coupled to a distal end of the intermediate bar 390 at a distal pivot 394. Similarly, a toolbar bar 392 may extend from the toolbar 312 to be pivotally coupled to the intermediate bar 390 at a body pivot 395 between the distal pivot 394 and the intermediate pivot 393 of the intermediate bar 390.

The row unit 310 may have many of the advantages discussed herein for the row unit 210. However, instead of utilizing the a single upper arm as illustrated for the linkage assembly 216 of the row unit 210, the row unit bar 391, intermediate bar 390 and toolbar bar 392 are interconnected between the first pivot 374 of the frame member 314 and the second pivot 376 of the toolbar 312. The specific lengths of the bars 390, 391, 392 and the distances between the pivots 374, 393, 394, 395, 376 may be selected to allow the row unit 310 to change an attitude of a row unit plane 350 as the work machine 11 and row unit 310 encounter changes in the underlying surface.

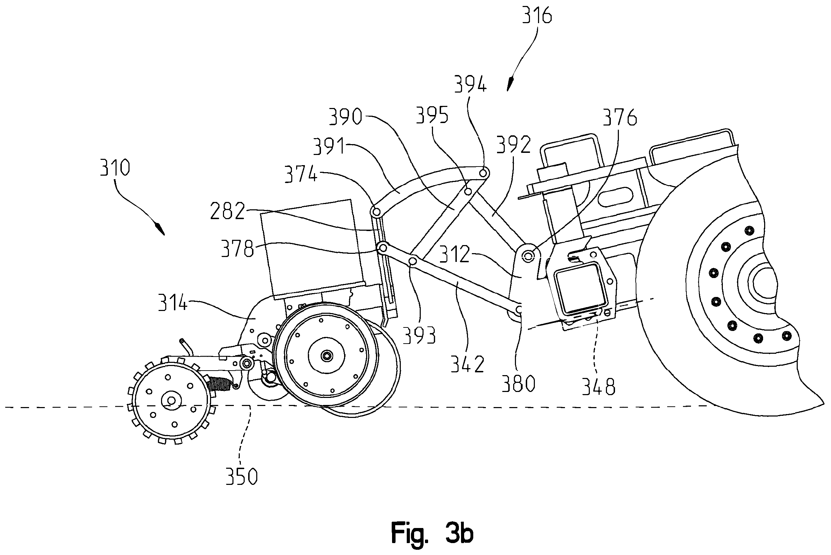

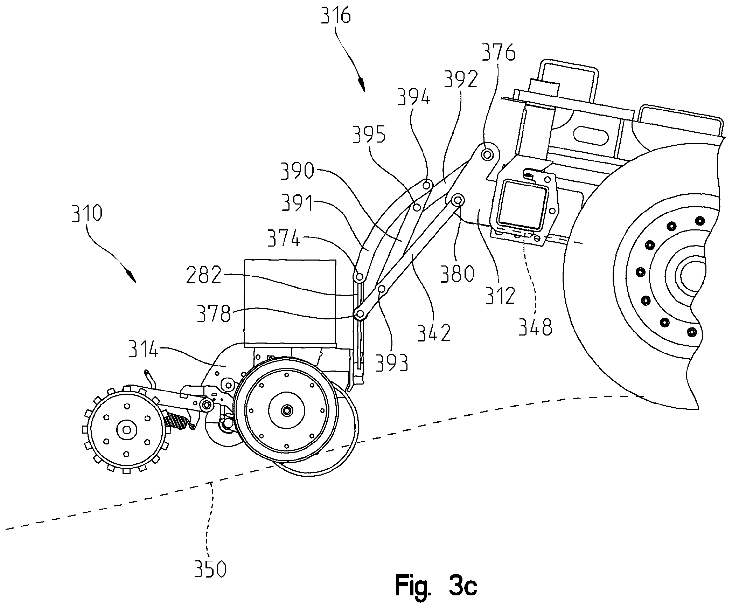

More specifically, Fig. 3b illustrates one embodiment wherein the work machine 11 has entered an uphill condition. In this embodiment, the attitude of the row unit 310 is altered by the linkage assembly 316 as the work machine 11 enters the uphill condition. Similarly, as illustrated in Fig. 3c, the linkage assembly 316 may be sized to align the components of the row unit 316 as illustrated as the work machine enters a downhill orientation. As discussed herein, the linkage assembly 316 is sized to allow the row unit 310 to move relative to the toolbar 312 to alter the alignment of the row unit 310 with the underlying surface as the work machine 11 enters uphill and downhill conditions.

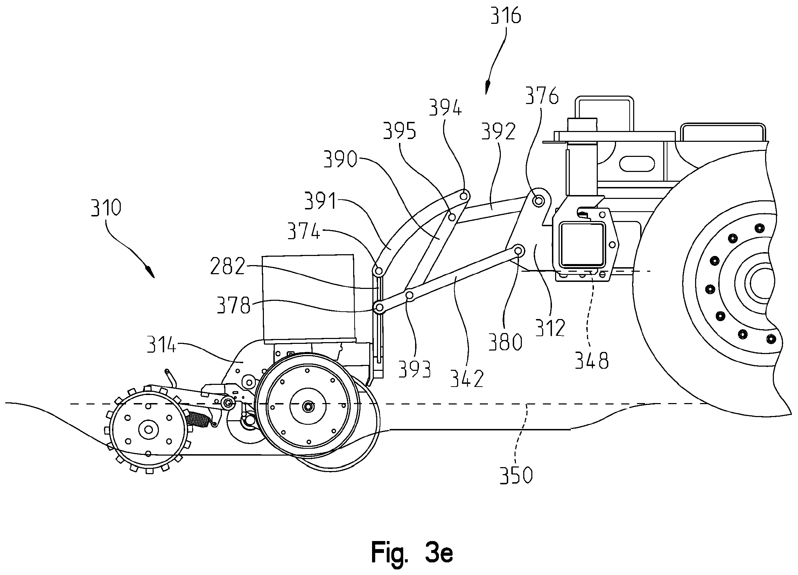

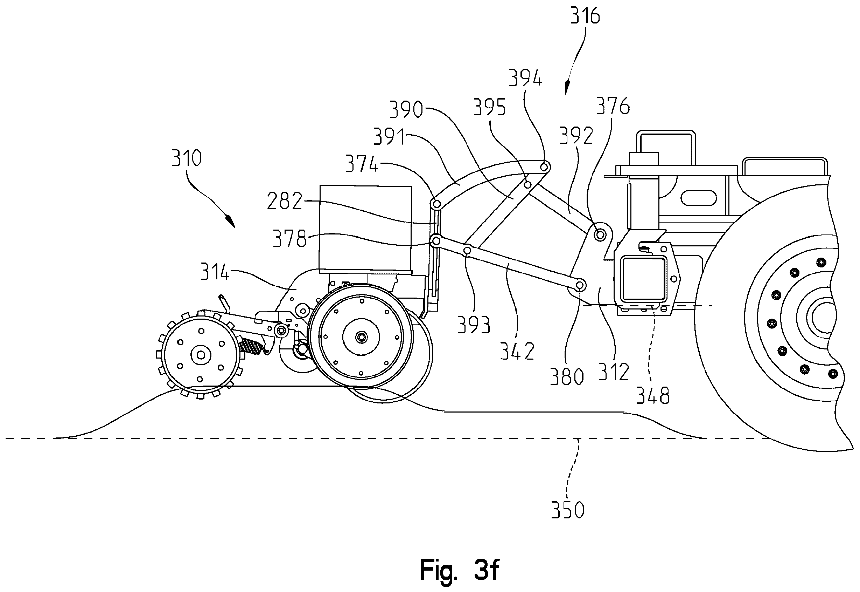

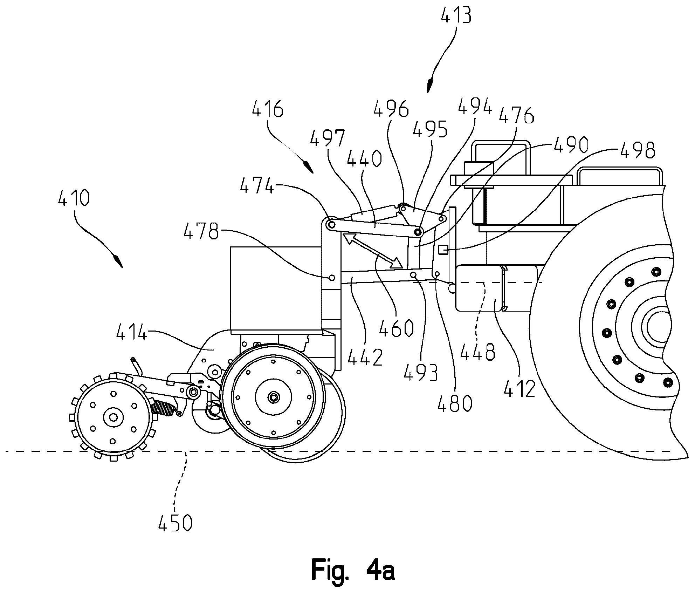

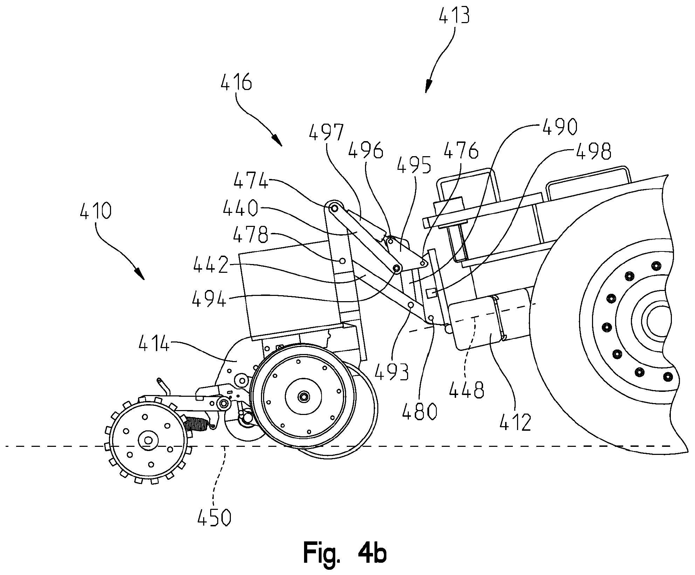

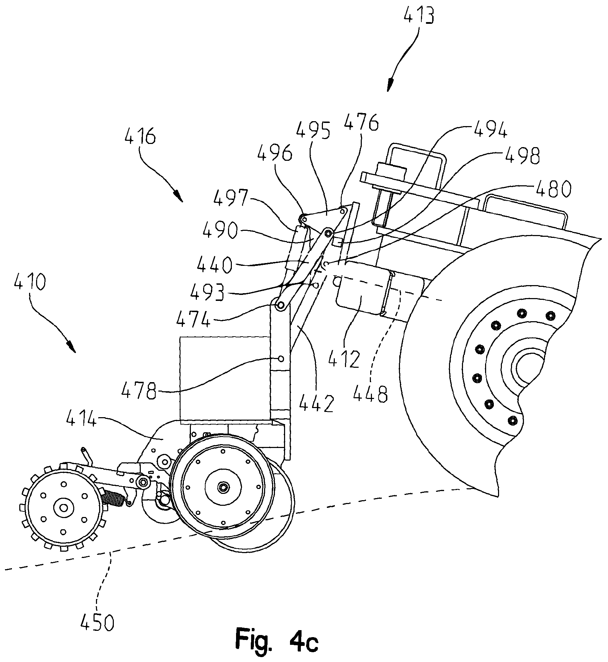

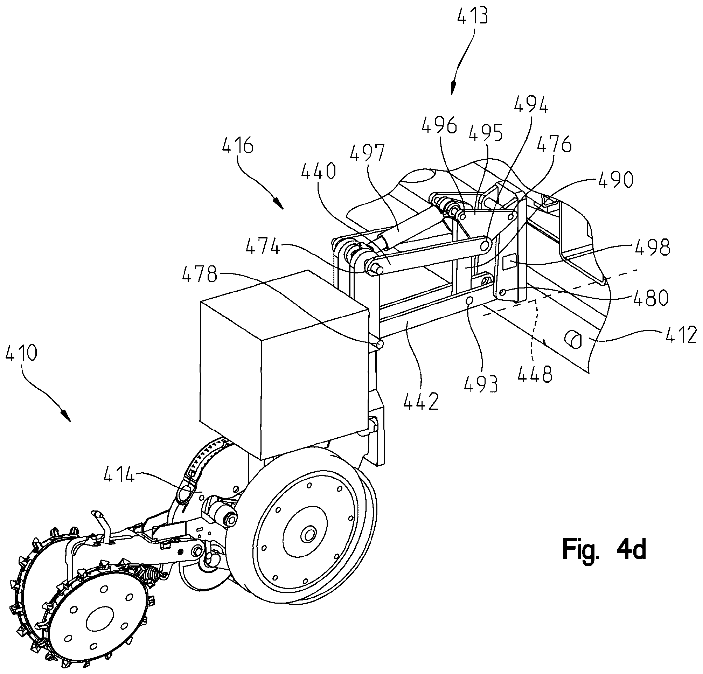

Figs. 3e and 3f illustrate situations wherein the row unit 310 is in a low spot relative to the toolbar 312 (Fig. 3e) and when the row unit 310 is in a high spot relative to the toolbar 312 (Fig. 3f). Relatively high and low spots in the underlying surface may be deviations in the underlying surface that are only along a focused section of the underlying surface and not consistent uphill or downhill changes. The linkage assembly 316 may respond as illustrated in Figs. 3e and 3f due to the specific lengths and pivot positions of the linkage assembly 316. Referring now to Figs. 4a-4f, yet another embodiment of a planter assembly 413, not forming part of the invention, is illustrated. The planter assembly 413 may comprise a row unit 410 having a frame member 414 and the typical components described herein for the row unit 210 that allow the row unit 410 to selectively open a furrow in the underlying surface at a desired depth, deposit a commodity therein, and close the furrow as the row unit is pulled along the underlying surface through a linkage assembly 416 coupled to a toolbar 412 that is further coupled to the work machine 11 via a hitch 15.

The linkage assembly 416 may movably couple the row unit 410 to the toolbar 412. More specifically, the linkage assembly 416 may have a plurality of components coupled between first and third pivots 474, 478 of the frame member 414 of the row unit 410 and second and fourth pivots 476, 480 of the toolbar 412 to allow the row unit 410 to substantially follow undulations in the underlying surface as discussed herein. The linkage assembly 416 may have a lower arm 442 pivotally coupled to and extending between the third pivot 478 and the fourth pivot 480 to pivotally couple the frame member 414 to the toolbar 412. An upper arm 440 may be pivotally coupled to the first pivot 474 of the frame member 414 on one end, and to an intermediate bar 490 on an opposite end. The intermediate bar 490 may be pivotally coupled to the lower arm 442 at an intermediate pivot 493 that is between the third pivot 478 and the fourth pivot 480. In the embodiment of Figs. 4a-4d, the intermediate pivot 493 may be biased towards the fourth pivot 480 relative to the third pivot 478. However, in other embodiments contemplated herein the intermediate pivot 493 is substantially centered between the third pivot 478 and the fourth pivot 480. Further still, in other embodiments the intermediate pivot 493 may be biased towards the third pivot 478 relative to the fourth pivot 480.

In one aspect of this disclosure, the linkage assembly 416 has a downforce actuator 460 that applies a springed tension force on the linkage assembly 416 to bias the row unit 410 towards the underlying surface. The downforce actuator 460 may extend from the first pivot 474 on one end to the intermediate pivot 493 of the linkage assembly 416 to apply a tension there between to provide a downforce to the row unit 410. The downforce actuator 460 may be a hydraulic actuator with an accumulator or the like, a pneumatic system providing a pressurized fluid to an actuator, a mechanical system having one or more spring, or any other known system that can apply a springed force to the linkage assembly 416 to bias the row unit 410 towards the underlying surface.

The upper arm 440 may be pivotally coupled to a bell crank 495 at a first bell crank pivot 494. The bell crank 495 may be further pivotally coupled to the toolbar 412 at the second pivot 476. The bell crank 495 may be a linkage component that has three pivot locations-the first bell crank pivot 494, the second pivot 476, and a second bell crank pivot 496. As mentioned herein, the first bell crank pivot 494 pivotally couples the bell crank 495 to the upper arm 440. The second pivot 476 pivotally couples the bell crank to the toolbar 412. The second bell crank pivot 496 pivotally couples the bell crank 495 to the intermediate bar 490 and an actuator 497. The actuator 497 is pivotally coupled to the bell crank 495 at the second bell crank pivot 496 on one end and pivotally coupled to the first pivot 474 on the other end. The length of the actuator 497 may be selectively adjustable to alter the orientation of the bell crank 495 relative to the frame member 414 to thereby alter the orientation of the row unit plane 450 relative to the planter plane 448. The actuator 497 may be pneumatic, hydraulic, electrical, or any other known type of linear actuator that allows for selective length adjustment. Regardless, the length of the actuator 497 may be selectively adjusted to allow the row unit 410 to remain properly aligned with the underlying surface as the work machine 11 traverses undulations therein.

In one aspect of this embodiment, the toolbar 412 may have a toolbar position sensor 498 coupled thereto. The toolbar position sensor 498 may communicate with a control system to identify the orientation of the planter plane 448. Further, the control system may monitor the toolbar position sensor 498 to identify when work machine 11 and planter assembly 413 enter uphill or downhill changes in the underlying surface. As one example, the control system may compare the current orientation of the toolbar 412 as identified by the toolbar position sensor 498 and compare the current orientation with the historical orientation to determine when there have been relative changes to the orientation of the toolbar 412, indicating entering an uphill or downhill change in the underlying surface.

The control system may also selectively alter the length of the actuator 497 to change the attitude or orientation of the row unit plane 450 relative to the planter plane 448. In one aspect of this disclosure, the control system may monitor the toolbar position sensor 498 to determine when the planter assembly 413 enters an uphill or downhill change in the underlying surface. When an uphill or downhill change is identified, the control system may alter the length of the actuator 497 to change the attitude of the row unit plane 450 so the row unit 410 remains properly aligned with the underlying surface as the row unit 410 is pulled into the identified uphill or downhill change in the underlying surface. The length of the actuator 497 may be modified to manipulate the bell crank 495 so the row unit 410 is able to both change the distance of the row unit 410 from the toolbar 412 and the attitude or orientation of the row unit plane 450 relative to the planter plane 448.

The control system may have a control algorithm stored therein to selectively modify the length of the actuator 497 based on a change in the orientation of the toolbar 412 or be programmable by a user to alter the orientation of the row unit 410 as desired by the user and input into the control system via user input.

The toolbar position sensor 498 may be any sensor able to identify the orientation of the toolbar 412. For example, the toolbar position sensor 498 may be an accelerometer, tilt sensor, LIDAR, or any other type of sensor that may be monitored by the control system to identify when the orientation of the toolbar 412 has changed. In this regard, the control system may store historical position data and determine relative movement of the orientation of the toolbar 412 compared to prior orientation readings from the toolbar position sensor 498. This allows the control system to manipulate the actuator 497 based on relative changes to the orientation of the toolbar 412 as identified through the toolbar position sensor 498. The control system may also identify when these relative changes in orientation of the toolbar 412 are consistent with an uphill entry, downhill entry, relative uphill condition, or relative downhill condition, among other things, and manipulate the actuator 497 accordingly.

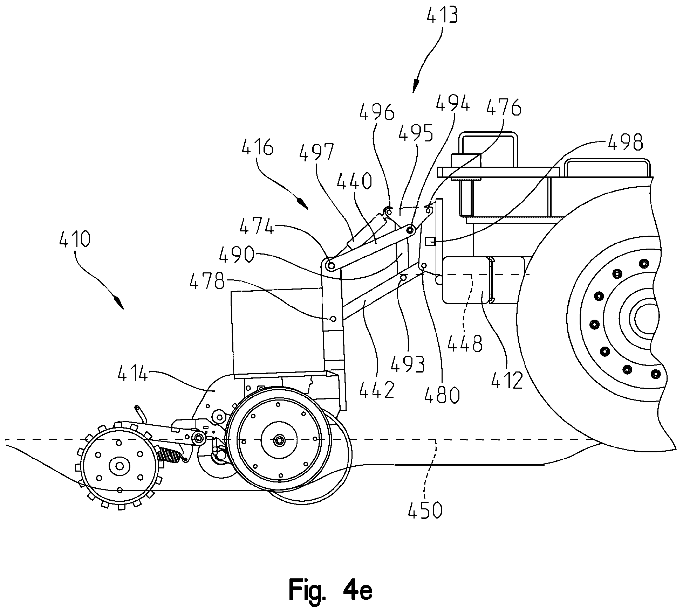

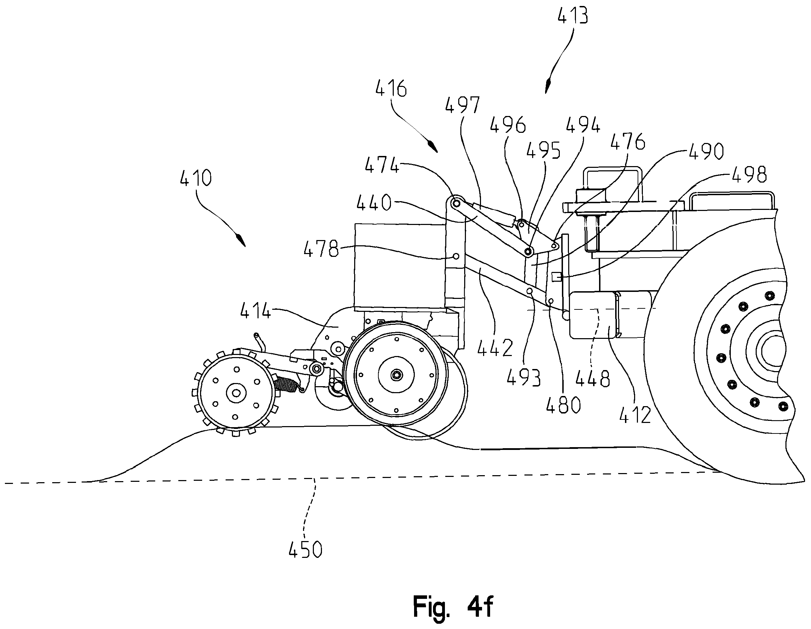

Figs. 4e and 4f illustrate situations wherein the row unit 410 is in a low spot relative to the toolbar 412 (Fig. 4e) and when the row unit 410 is in a high spot relative to the toolbar 412 (Fig. 4f). Relatively high and low spots in the underlying surface may be deviations in the underlying surface that are only along a focused section of the underlying surface and not consistent uphill or downhill changes. The linkage assembly 416 may respond as illustrated in Figs. 4e and 4f due to the specific lengths and pivot positions of the linkage assembly 416 and the length of the actuator 497. As discussed herein, the particular length of the actuator 497 may be manipulated by the control system to ensure the row unit 410 remains properly aligned with the underlying ground during these relative uphill and downhill situations.

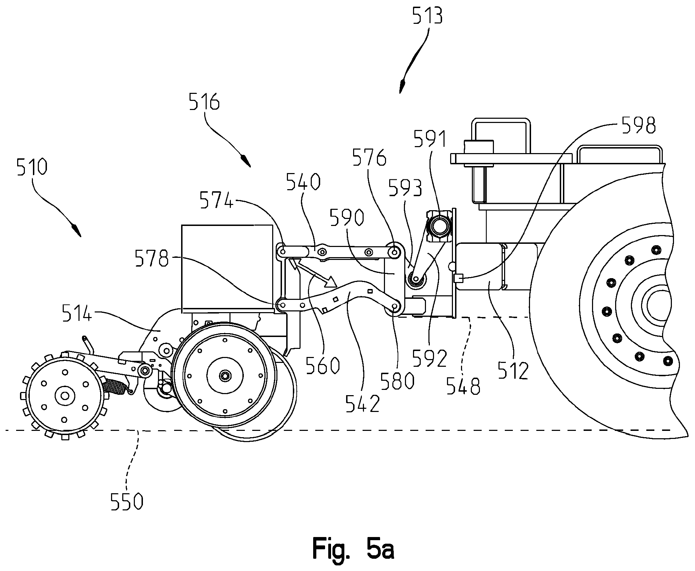

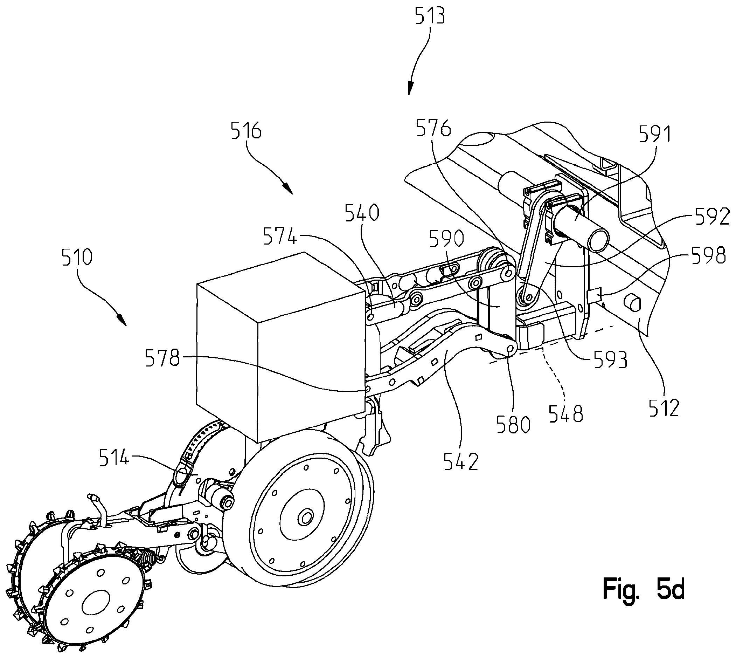

Referring now to Figs. 5a-5f, yet another embodiment of the present disclosure, not forming part of the invention, is illustrated. The planter assembly 513 may have a row unit 510 movably coupled to a toolbar 512 through a linkage assembly 516. More specifically, the row unit 510 may have a frame member 514 that has the typical components described herein or otherwise for the row unit 210 that allow the row unit 510 to selectively open a furrow in the underlying surface at a desired depth, deposit a commodity therein, and close the furrow as the row unit is pulled along the underlying surface through a linkage assembly 516 coupled to the toolbar 512 that is further coupled to the work machine 11 via a hitch 15.

The linkage assembly 516 movably couples the row unit 510 to the toolbar 512 such that an attitude of a row unit plane 550 may be altered relative to a planter plane 548 as the planter assembly 513 encounters changes to the underlying surface. The linkage assembly 516 has an upper arm or link 540 pivotally coupled on one end to the frame member 514 of the row unit 510 at a first pivot 574. The upper link 540 extends from the first pivot 574 and is pivotally coupled to a pivot linkage 590 at a second pivot 576. Similarly, a lower arm or base bar 542 may be pivotally coupled to, and extend from, a third pivot 578 of the frame member 514 to a fourth pivot 580 of the pivot linkage 590.

The pivot linkage 590 may be pivotally coupled to the toolbar at the fourth pivot 580 such that the pivot linkage 590 and the upper link 540 and base bar 542 coupled thereto can pivot about the fourth pivot 580 relative to the toolbar 512. Further, a rockshaft 591 may be rotationally coupled to the toolbar 512 so that the rockshaft 591 may selectively rotate an arm 592 about a rockshaft axis defined through the rockshaft 591. The arm 592 may be pivotally coupled to a rockshaft linkage 593 which extends from the arm 592 and is pivotally coupled to the pivot linkage 590 and upper link 540 at the second pivot 576. In this configuration, the rockshaft 591 can selectively rotate to alter the position of the arm 592 relative to the toolbar 512. As the arm 592 moves, the rockshaft linkage 593 pivots about the fourth pivot 280 relative to the toolbar 512 to accommodate for the movement of the arm 592. Further, the upper link 540 and base bar 542 transfer the pivotal movement of the pivot linkage 590 to thereby alter the attitude of the frame member 514 of the row unit 510 to alter the row unit plane 550.

The upper arm 540 and lower arm 542 may be a parallelogram with the pivot linkage 590 and the frame member 514 or have an unequal distribution there between as described herein for the linkage assembly 216. Regardless, the rotation of the rockshaft 591 may be selectively controlled to alter the attitude of the row unit plane 550 of the row unit 510. The rotation of the rockshaft 591 may be controlled by an actuator extending between the toolbar 512 and a mount of the rockshaft 591 to selectively rotate the rockshaft 591.

The toolbar 512 may have a toolbar position sensor 598 coupled thereto that indicates the orientation of the planter plane 548 to a control system similar to the position sensor 498. The toolbar position sensor 598 may function in substantially the same way as the toolbar position sensor 498 to identify changes to the orientation of the toolbar 512. For example, the toolbar position sensor 598 may communicate to the control system when the planter plane 548 is changing relative to historical position data. Further, the control system may modify the angular location of the rockshaft 591 based on the changing orientation of the planter plane 548 to ensure the components of the row unit 510 remain properly aligned with the underlying surface.

The toolbar position sensor 598 may be any sensor able to identify the orientation of the toolbar 512. For example, the toolbar position sensor 598 may be an accelerometer, tilt sensor, LIDAR, or any other type of sensor that may be monitored by the control system to identify when the orientation of the toolbar 512 has changed. In this regard, the control system may store historical position data and determine relative movement of the orientation of the toolbar 512 compared to prior orientation readings from the toolbar position sensor 598. This allows the control system to manipulate the rockshaft 591 based on relative changes to the orientation of the toolbar 512 as identified through the toolbar position sensor 598. The control system may also identify when these relative changes in orientation of the toolbar 512 are consistent with an uphill entry, downhill entry, relative uphill condition, or relative downhill condition, among other things, and manipulate the angle of the rockshaft 591 accordingly.

In one aspect of this disclosure, the linkage assembly 516 has a downforce actuator 560 that applies a springed tension force on the linkage assembly 516 to bias the row unit 510 towards the underlying surface. The downforce actuator 560 may extend from the first pivot 574 on one end to a portion of the lower arm 542 of the linkage assembly 516 to apply a tension there between to provide a downforce to the row unit 510. The downforce actuator 560 may be a hydraulic actuator with an accumulator or the like, a pneumatic system providing a pressurized fluid to an actuator, a mechanical system having one or more spring, or any other known system that can apply a springed force to the linkage assembly 516 to bias the row unit 510 towards the underlying surface.

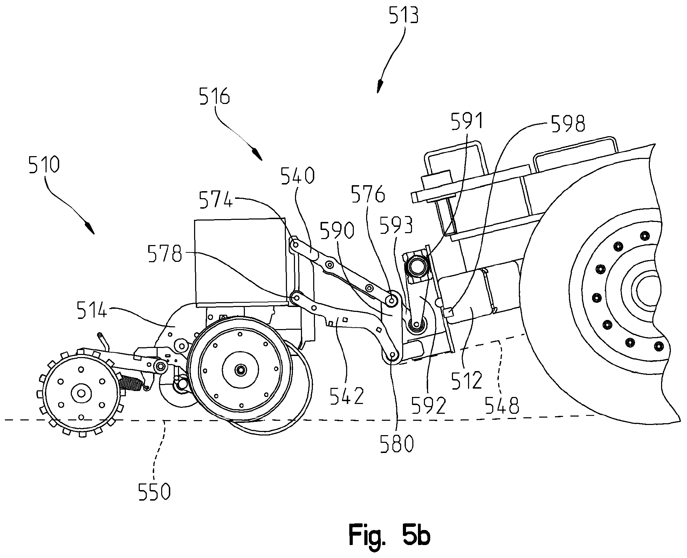

Fig. 5b illustrates a situation wherein the work machine 11 has entered an uphill condition in the underlying surface. In this situation, the toolbar position sensor 598 may identify a change in the orientation of the planter plane 548 as the work machine 11 enters the uphill condition. As a response, the arm 592 may be pivoted towards the toolbar 512 by the rockshaft 591 to alter the attitude of the row unit plane 550 relative to the planter plane 548. More specifically, as the rockshaft 591 rotates the arm 592 towards the toolbar 512, the rockshaft linkage 593 pulls the second pivot 576 of the pivot linkage 590 towards the toolbar 512 to allow the row unit plane 550 to correspondingly rotate relative to the planter plane 548 so the components of the row unit 510 remain properly aligned with the underlying surface as the planter assembly 513 enters the uphill condition. Further, the pivotal coupling of the upper link 540 and base bar 542 between the pivot linkage 590 and the frame member 514 allows the row unit 510 to move to various relative heights from the toolbar 512 while maintaining the attitude of the row unit plane 550 established by the position of the rockshaft 591. In other words, the rockshaft 591 may pivot the linkage assembly 516 to change the attitude or orientation of the row unit plane 550 while the upper link 540 and base bar 542 allow the row unit 510 to move relative to the toolbar 512 while maintaining the attitude of the row unit plane 550.

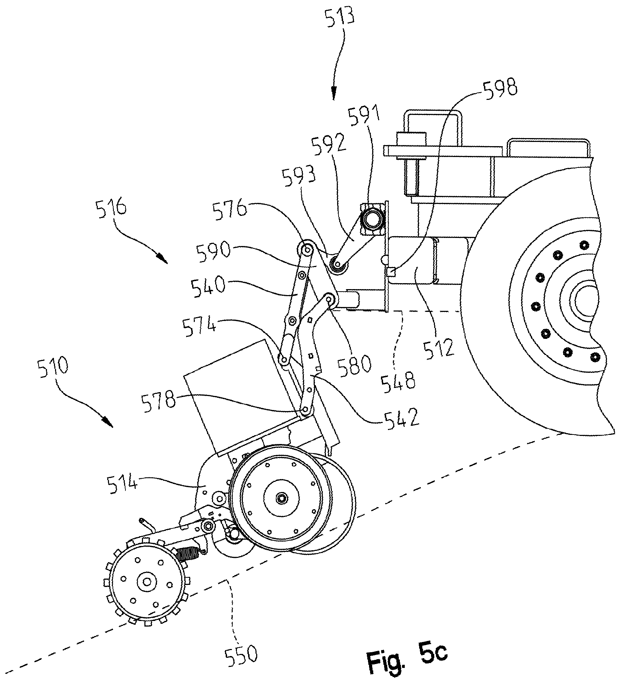

Alternatively, Fig. 5c illustrates a situation wherein the work machine 11 has entered a downhill condition in the underlying surface. In this situation, the toolbar position sensor 598 may identify a change in the orientation of the planter plane 548 as the work machine 11 enters the downhill condition. As a response, the arm 592 may be pivoted away from the toolbar 512 by the rockshaft 591 to alter the attitude of the row unit plane 550 relative to the planter plane 548. More specifically, as the rockshaft 591 rotates the arm 592 away from the toolbar 512, the rockshaft linkage 593 pushes the second pivot 576 of the pivot linkage 590 away from the toolbar 512 to allow the row unit plane 550 to correspondingly rotate relative to the planter plane 548 so the components of the row unit 510 remain properly aligned with the underlying surface as the planter assembly 513 enters the downhill condition. Further, the pivotal coupling of the upper link 540 and base bar 542 between the pivot linkage 590 and the frame member 514 allows the row unit 510 to move to various relative heights from the toolbar 512 while maintaining the attitude of the row unit plane 550 established by the position of the rockshaft 591. In other words, the rockshaft 591 may pivot the linkage assembly 516 to change the attitude or orientation of the row unit plane 550 while the upper link 540 and base bar 542 allow the row unit 510 to move relative to the toolbar 512 while maintaining the attitude of the row unit plane 550.

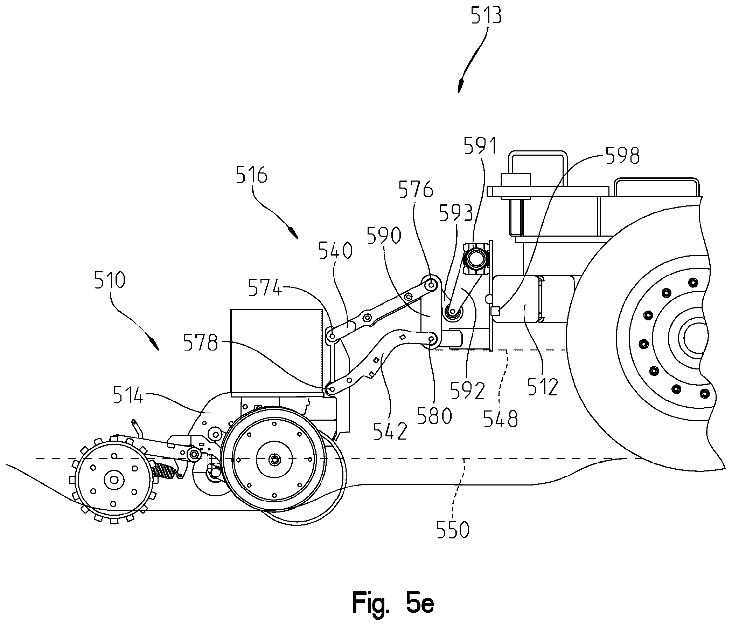

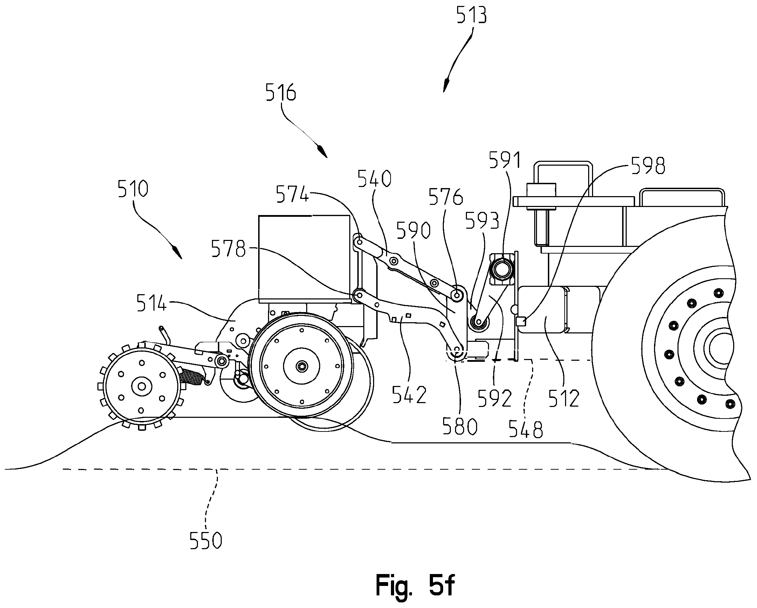

Figs. 5e and 5f illustrate situations wherein the row unit 510 is in a low spot relative to the toolbar 512 (Fig. 5f) and when the row unit 510 is in a high spot relative to the toolbar 512 (Fig. 5e). Relatively high and low spots in the underlying surface may be deviations in the underlying surface that are only along a focused section of the underlying surface and not consistent uphill or downhill changes. The linkage assembly 516 may respond as illustrated in Figs. 5e and 5f due to the specific lengths and pivot positions of the linkage assembly 516 and the position of the rockshaft 591. As discussed herein, the particular orientation of the rockshaft 591 may be manipulated by the control system to ensure the row unit 510 remains properly aligned with the underlying ground during these relative uphill and downhill situations. For example, the rockshaft 591could return to a neutral position when the row unit is within the relative low or high spot. In this configuration, the linkage assembly 516 may have substantially parallel arms that adjust the orientation of the row unit 510 as the rockshaft 591 returns to the neutral position so the row unit 510 aligns with the underlying surface in the relative low or high spot.

The orientation of the rockshaft 591 may be controlled by an actuator coupled to the rockshaft 591 to selectively rotate the rockshaft 591. The actuator may be controlled by the control system to selectively rotate the rockshaft 591 based on feedback from the toolbar position sensor 598. Further, the rockshaft 591 may extend through multiple row units 510 to simultaneously selectively alter the attitude of the row unit planes 550 of adjacent row units. While the upper link 540 and lower link 542 are illustrated in Figs. 5a-5d as being about the same length and pivotally coupled to pivots 574, 576, 578, and 580 that are spaced to substantially create a parallelogram, this disclosure contemplates utilizing unequal lengths and pivot locations between the frame member 514 and the pivot linkage 590 as well. More specifically, in one example, the upper link 540 may be sized and positioned similar to the upper arm 240 and the base bar 542 may be sized and positioned similar to the lower arm 242. Further, other configurations of the upper link 540 and base bar 542 are contemplated herein.

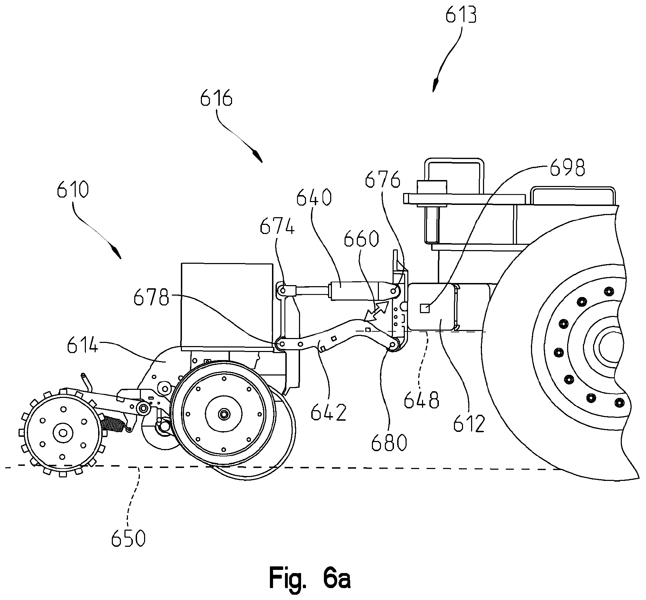

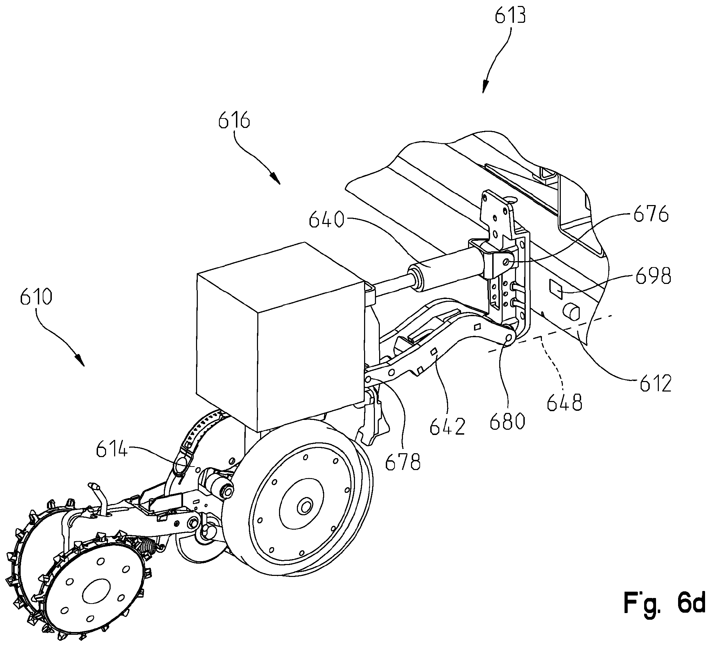

Referring now to Figs. 6a-6f, yet another embodiment of this disclosure, not forming part of the invention, is illustrated. More specifically, Figs. 6a-6f illustrate a planter assembly 613 having a row unit 610 movably coupled to a toolbar 612 that is selectively coupleable to the work machine 11 via a hitch 15.

The row unit 610 has a plurality of components discussed herein coupled to a frame member 614. The components of the row unit 610 may include one or more of a cutting disk to open a furrow in the soil, a gauge wheel to set the depth of the cutting disk, a debris cleaner to clear debris along the cutting path, and a closing disk configured to close the furrow created by the cutting disk among other things. Further a commodity distribution system may selectively distribute a commodity, such as seed or fertilizer, in the opened furrow. This disclosure also contemplates that the row unit 610 may contain any other known components of a row unit as well.

The frame member 614 of the row unit 610 may be movably coupled to the toolbar 612 through a linkage assembly 616. The linkage assembly 616 may couple the row unit 610 to the toolbar 612 such that the toolbar 612 can pull the row unit 610 while substantially maintaining an attitude of a row unit plane 650 and allowing the row unit 610 to move relative to the toolbar 612. In the planter assembly 613, the linkage assembly 616 has an actuator 640 pivotally coupled to the frame member 614, or a bracket thereof, at a first pivot 674 and pivotally coupled to the toolbar 612, or a bracket thereof, at a second pivot 676. Similarly, a base bar 642 may be pivotally coupled to the frame member 614 or a bracket thereof, at a third pivot 678 and pivotally coupled to the toolbar 612, or a bracket thereof, at a fourth pivot 680. When the actuator 640 has a locked length between the first and second pivots 674, 676, the actuator 640 and base bar 642 may function as a four-bar linkage between the toolbar 612 and the row unit 610. In this configuration, the row unit 610 may move relative to the toolbar 612 while substantially maintaining the attitude or orientation of a row unit plane 650 relative to a planter plane 648 defined by the toolbar 612.

The actuator 640 may be hydraulic, pneumatic, mechanical, or any other linear actuator that is selectively resizable. In one aspect of this disclosure, a control system may selectively alter the length of the actuator 640 to change the attitude or orientation of the planter plane 648. More specifically, the actuator 640 may be in fluid communication with an electro-hydraulic or electro-pneumatic system that can be manipulated by the control system to selectively provide fluid to, or exhaust fluid out of, the actuator 640 to change the length thereof. Alternatively the control system may be in communication with an electro-mechanical system to selectively alter the actuator 640 based on electrical signals provided to the actuator through the control system. Regardless, the control system may selectively alter the length of the actuator 640 to change the attitude or orientation of the row unit plane 650 relative to the planter plane 648.

**In** another aspect of this embodiment, the control system may be in communication with a toolbar position sensor 698. The toolbar position sensor 698 may be coupled to the toolbar 612, or a bracket thereof, to identify the relative orientation of the toolbar 612. **In** one example, the control system may record historical orientations of the toolbar with the toolbar position sensor 698 and compare historical orientations with a present orientation of the toolbar 612. The control system may identify when the planter assembly 613 enters an uphill or downhill feature by comparing the present values of the toolbar position sensor 698 with the historical data therefrom. When the control system identifies a change in the orientation of the toolbar 612 with the toolbar position sensor 698, the control system may selectively alter the length of the actuator 640 to change the attitude or orientation of the row unit plane 650 relative to the planter plane 648 to allow the components of the row unit 610 to better following the underlying surface as the row unit 610 is pulled into the changed feature in the underlying surface.

The toolbar position sensor 698 may be any sensor able to identify the orientation of the toolbar 612. For example, the toolbar position sensor 698 may be an accelerometer, tilt sensor, LIDAR, or any other type of sensor that may be monitored by the control system to identify when the orientation of the toolbar 612 has changed. In this regard, the control system may store historical position data and determine relative movement of the orientation of the toolbar 612 compared to prior orientation readings from the toolbar position sensor 698. This allows the control system to manipulate the actuator 640 based on relative changes to the orientation of the toolbar 612 as identified through the toolbar position sensor 698. The control system may also identify when these relative changes in orientation of the toolbar 612 are consistent with an uphill entry, downhill entry, relative uphill condition, or relative downhill condition, among other things, and manipulate the actuator 640 accordingly.

In one aspect of this disclosure, the linkage assembly 616 has a downforce actuator 660 that applies a springed force on the linkage assembly 616 to bias the row unit 610 towards the underlying surface. The downforce actuator 660 may extend from the toolbar 612 on one end to the base bar 642 of the linkage assembly 616 to apply the downforce to the row unit 610. The downforce actuator 660 may be a hydraulic actuator with an accumulator or the like, a pneumatic system providing a pressurized fluid to an actuator, a mechanical system having one or more spring, or any other known system that can apply a springed force to the linkage assembly 616 to bias the row unit 610 towards the underlying surface.

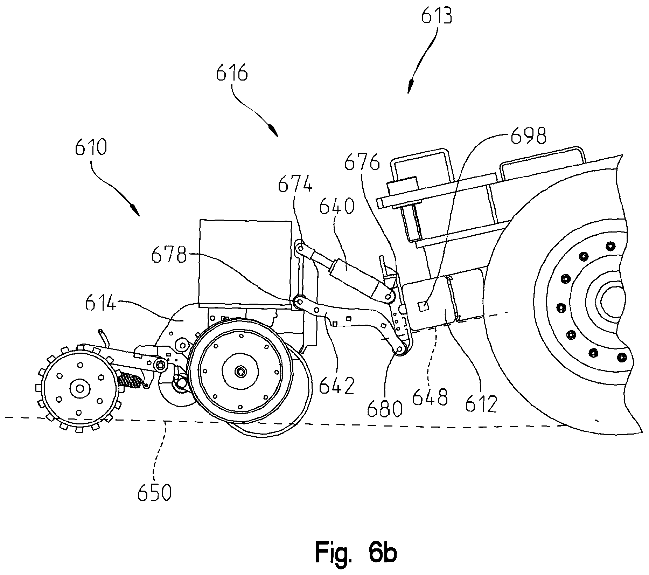

Referring now to Fig. 6b, one example of a modified attitude of the row unit plane 650 relative to the planter plane 648 as the planter assembly 613 enters an uphill feature in the underlying soil is illustrated. In this configuration, as the work machine 11 enters the uphill feature, the toolbar 612 may begin to rotate as the toolbar 612 is pulled uphill by the work machine 11. The control system may identify the change in orientation of the toolbar 612 and planter plane 648 by monitoring the toolbar position sensor 698 as discussed herein. Further, once the control system identifies that the planter assembly 613 is entering an uphill feature, the control system may begin altering the length of the actuator 640 to thereby change the attitude of the row unit plane 650 relative to the planter plane 648 so the components of the row unit 610 can better follow the contours of the underlying surface as the row unit 610 is pulled into the uphill feature by the work machine. More specifically, the control system may shorten the actuator 640 so the attitude or orientation of the row unit 610 remains aligned with the level portion of the underlying surface as the work machine 11 and other forward components of the planter assembly 613 enter the uphill feature. Once the control system identifies a consistent orientation of the planter plane 648 the control system may return the actuator 640 to a neutral length.

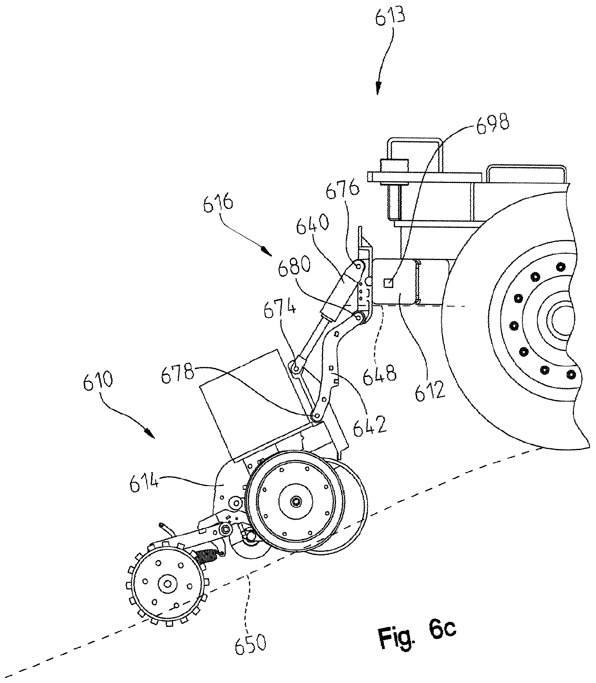

Referring now to Fig. 6c, one example of a modified attitude of the row unit plane 650 relative to the planter plane 648 as the planter assembly 613 enters a downhill feature in the underlying soil is illustrated. In this configuration, as the work machine 11 enters the downhill feature, the toolbar 612 may begin to rotate as the toolbar 612 is pulled downhill by the work machine 11. The control system may identify the change in orientation of the toolbar 612 and corresponding planter plane 648 by monitoring the toolbar position sensor 698 as discussed herein. Further, once the control system identifies that the planter assembly 613 is entering a downhill feature, the control system may begin altering the length of the actuator 640 to thereby change the attitude of the row unit plane 650 relative to the planter plane 648 so the components of the row unit 610 can better follow the contours of the underlying surface as the row unit 610 is pulled into the downhill feature by the work machine 11. More specifically, the control system may lengthen the actuator 640 so the attitude or orientation of the row unit 610 remains aligned with the underlying surface as the work machine 11 and other forward components of the planter assembly 613 enter the downhill feature. Once the control system identifies a consistent orientation of the planter plane 648 the control system may return the actuator 640 to a neutral length.

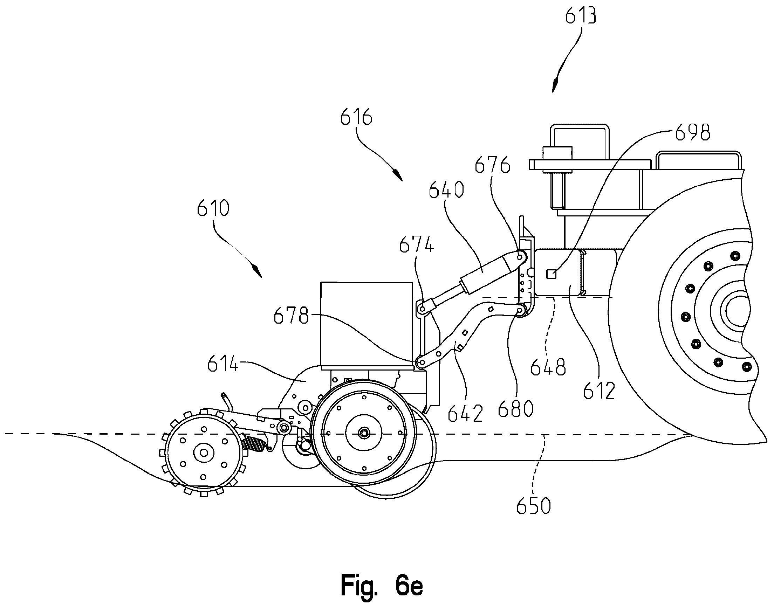

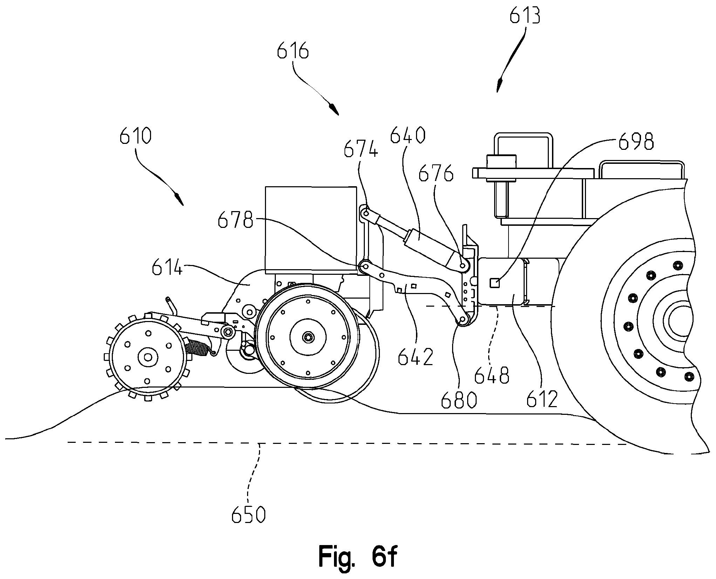

Figs. 6e and 6f illustrate situations wherein the row unit 610 is in a low spot relative to the toolbar 612 (Fig. 6e) and when the row unit 610 is in a high spot relative to the toolbar 612 (Fig. 6f). Relatively high and low spots in the underlying surface may be deviations in the underlying surface that are only along a focused section of the underlying surface and not consistent uphill or downhill changes. The linkage assembly 616 may respond as illustrated in Figs. 6e and 6f due to the specific lengths and pivot positions of the linkage assembly 616 and the length of the actuator 640. As discussed herein, the particular length of the actuator 640 may be manipulated by the control system to ensure the row unit 610 remains properly aligned with the underlying ground during these relative uphill and downhill situations.

In one aspect of this disclosure, the first and third pivots 674, 678 may be spaced about the same distance from one another as the second and fourth pivots 676, 680. Alternatively, also contemplated herein is an embodiment wherein the first and third pivots 674, 678 may be spaced about a different distance from one another than the second and fourth pivots 676, 680 similar to the pivots 274, 276, 278, 280 of the planter assembly 213. Further, other orientations of the pivots 674, 676, 678, 680 are also contemplated herein.

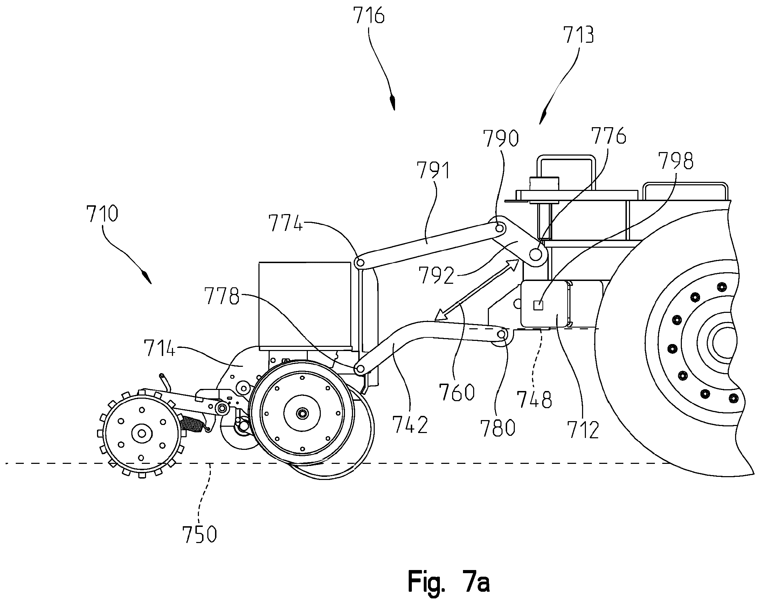

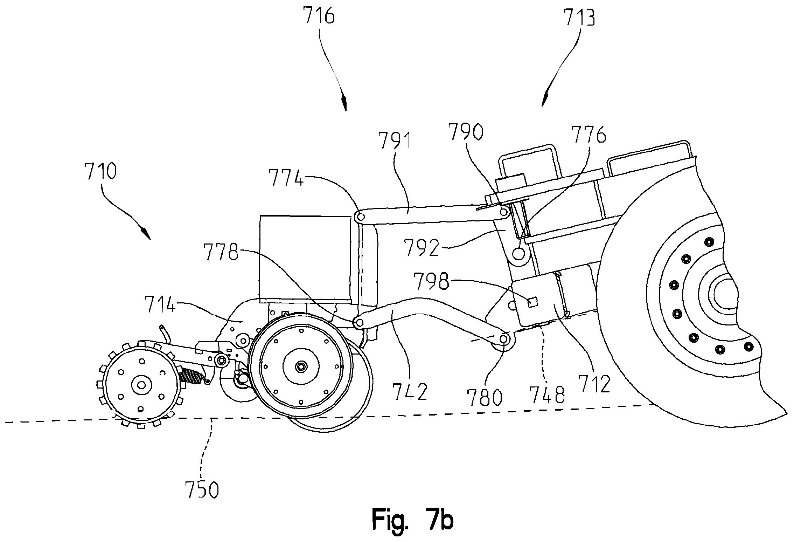

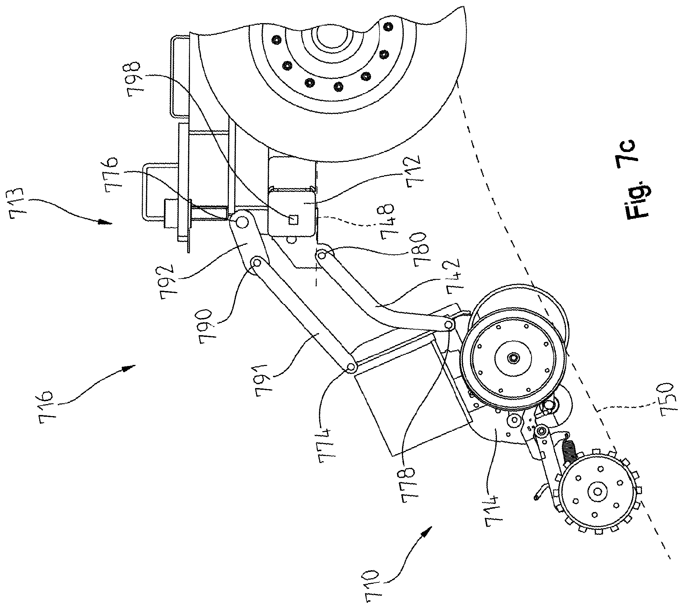

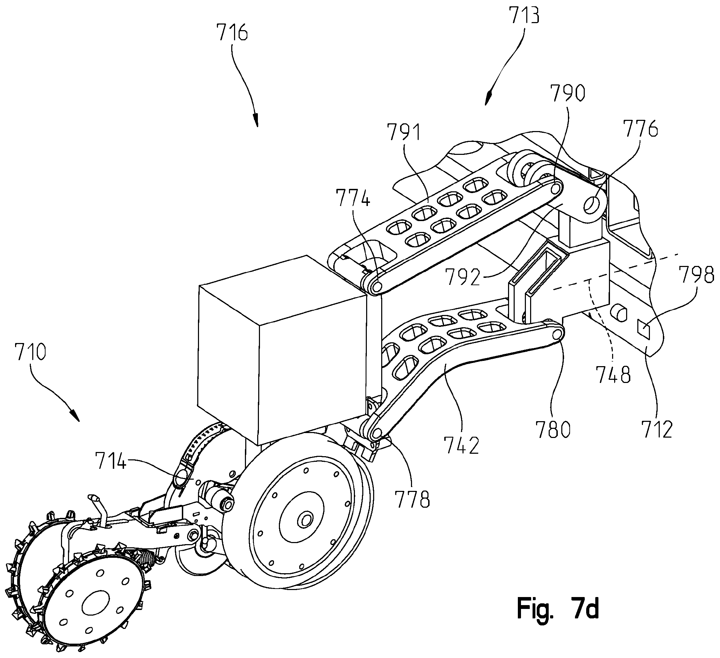

Referring now to Figs. 7a-7f, yet another embodiment of this disclosure not forming part of the invention, is illustrated. More specifically, Figs. 7a-7f illustrate a planter assembly 713 having a row unit 710 movably coupled to a toolbar 712 that is selectively coupleable to the work machine 11 via a hitch 15. The row unit 710 has a plurality of components discussed herein coupled to a frame member 714. The components of the row unit 710 may include one or more of a cutting disk to open a furrow in the soil, a gauge wheel to set the depth of the cutting disk, a debris cleaner to clear debris along the cutting path, and a closing disk configured to close the furrow created by the cutting disk among other things. Further a commodity distribution system may selectively distribute a commodity, such as seed or fertilizer, in the opened furrow. This disclosure also contemplates that the row unit 710 may contain any other known components of a row unit as well.

The frame member 714 of the row unit 710 may be movably coupled to the toolbar 712 through a linkage assembly 716. The linkage assembly 716 may couple the row unit 710 to the toolbar 712 such that the toolbar 712 can pull the row unit 710 while substantially maintaining an attitude of a row unit plane 750 and allowing the row unit 710 to move relative to the toolbar 712. In the planter assembly 713, the linkage assembly 716 has a row unit bar 791 pivotally coupled to the frame member 714 at a first pivot 774 and pivotally coupled to a toolbar bar 792 at an intermediate pivot 790. The toolbar bar 792 is pivotally coupled to the toolbar 712, or a bracket thereof, at a second pivot 776 and extends to pivotally couple to the row unit bar 791 at the intermediate pivot 790. In one aspect of this disclosure, the second pivot 776 is a rockshaft and the toolbar bar 792 is a rockshaft arm. In this configuration, the rockshaft 776 at the second pivot 776 may be rotated to alter the orientation of one or more row unit 710 coupled to the rockshaft 776.

Similarly, the linkage assembly has a base bar 742 pivotally coupled to the frame member 714, or a bracket thereof, at a third pivot 778 and pivotally coupled to the toolbar 712, or a bracket thereof, at a fourth pivot 780. The pivotal orientation of the toolbar bar 792 relative to the toolbar 712 may be altered by a rockshaft or linear actuator among other things. In other words, the angular orientation of the toolbar bar 792 relative to the toolbar 712 may be altered to selectively change the attitude of the row unit plane 750 by moving the location of the intermediate pivot 790 relative to the toolbar 712. In this configuration, the position of the toolbar bay 792 may dictate the attitude of the row unit plane 750 relative to the planter plane 748 and the row unit 710 may otherwise move relative to the toolbar 712 while substantially maintaining the attitude or orientation of a row unit plane 750 relative to a planter plane 748.

In one aspect of this disclosure, the linkage assembly 716 has a downforce actuator 760 that applies a springed force on the linkage assembly 716 to bias the row unit 710 towards the underlying surface. The downforce actuator 760 may extend from the toolbar 712 on one end to the base bar 742 of the linkage assembly 716 to apply the downforce to the row unit 710. The downforce actuator 760 may be a hydraulic actuator with an accumulator or the like, a pneumatic system providing a pressurized fluid to an actuator, a mechanical system having one or more spring, or any other known system that can apply a springed force to the linkage assembly 716 to bias the row unit 710 towards the underlying surface.

The angle of the toolbar bar 792 relative to the toolbar 712 may be selectively altered by a rockshaft coupled to the toolbar bar 792 at the second pivot 776. Alternatively, a linear actuator may be coupled between the toolbar 712 and the toolbar bar 792 to selectively alter the angle of the toolbar bar 792 relative to the toolbar 712 by altering the length of the linear actuator through a control system. The linear actuator could be hydraulic, pneumatic, electrical, or any combination thereof.

A toolbar position sensor 798 may be coupled to the toolbar 712 to identify changes to the orientation of the toolbar 712 to a control system. In this configuration, the angle of the toolbar bar 792 may be altered to change the attitude of the row unit plane 750 when the toolbar position sensor 798 identifies a change in the attitude of the planter plane 748 to ensure the row unit 710 remains properly aligned with the underlying surface. The toolbar position sensor 798 may be any sensor able to identify the orientation of the toolbar 712. For example, the toolbar position sensor 798 may be an accelerometer, tilt sensor, LIDAR, or any other type of sensor that may be monitored by the control system to identify when the orientation of the toolbar 712 has changed. In this regard, the control system may store historical position data and determine relative movement of the orientation of the toolbar 712 compared to prior orientation readings from the toolbar position sensor 798. This allows the control system to manipulate the angle of the toolbar bar 792 based on relative changes to the orientation of the toolbar 712 as identified through the toolbar position sensor 798. The control system may also identify when these relative changes in orientation of the toolbar 712 are consistent with an uphill entry, downhill entry, relative uphill condition, or relative downhill condition, among other things, and manipulate the angle of the toolbar bar 792 accordingly.

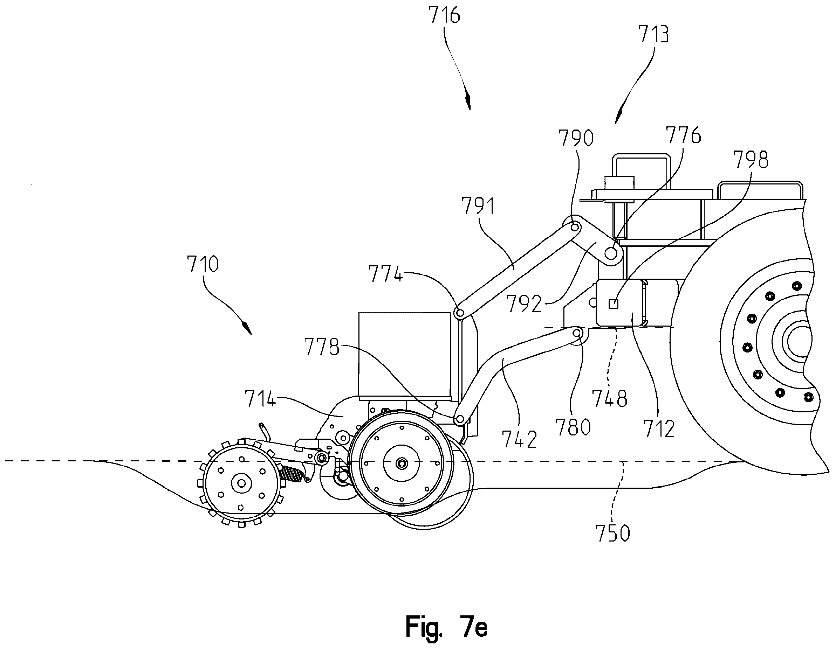

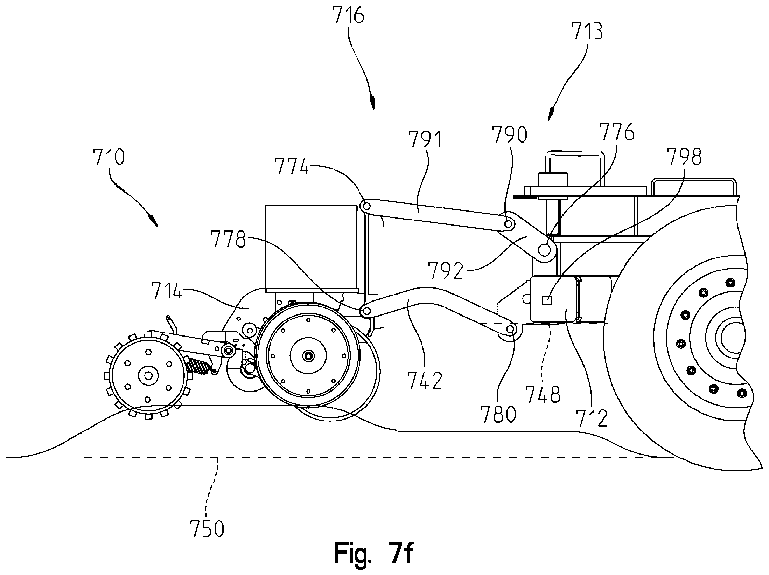

Figs. 7e and 7f illustrate situations wherein the row unit 710 is in a low spot relative to the toolbar 712 (Fig. 7e) and when the row unit 710 is in a high spot relative to the toolbar 712 (Fig. 7f). Relatively high and low spots in the underlying surface may be deviations in the underlying surface that are only along a focused section of the underlying surface and not consistent uphill or downhill changes. The linkage assembly 716 may respond as illustrated in Figs. 7e and 7f due to the specific lengths and pivot positions of the linkage assembly 716 and the angular orientation of the toolbar bar 792 relative to the toolbar 712. As discussed herein, the particular orientation of the toolbar bar 792 may be manipulated by the control system to ensure the row unit 710 remains properly aligned with the underlying ground during these relative uphill and downhill situations. When the second pivot 776 is a rockshaft, the rockshaft and toolbar bar 792, or rockshaft arm, may be positioned such that the base bar 742 and the row unit bar 791 can form a parallelogram which can deal with the local undulations without requiring further movement of the rockshaft.

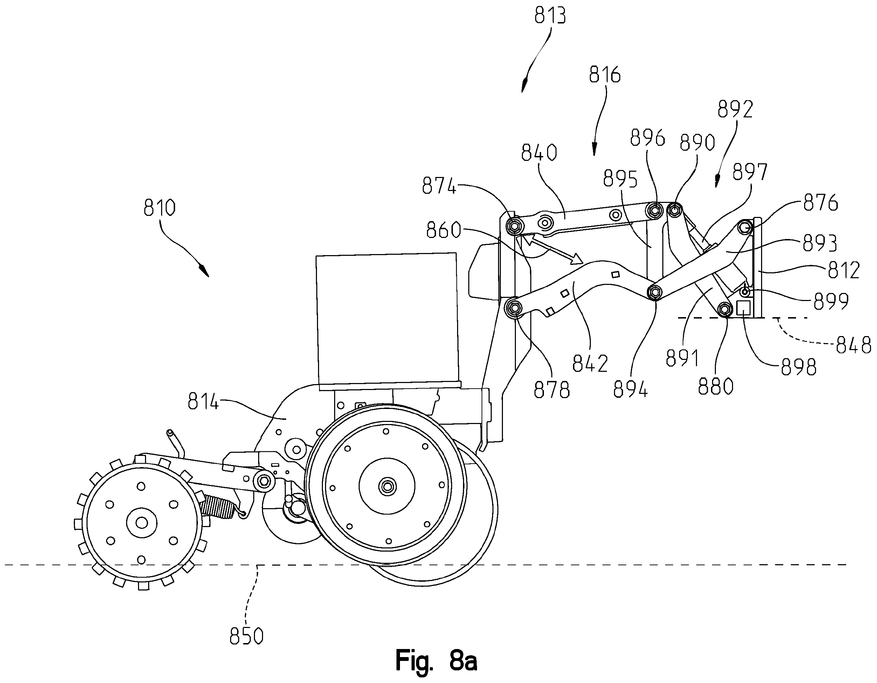

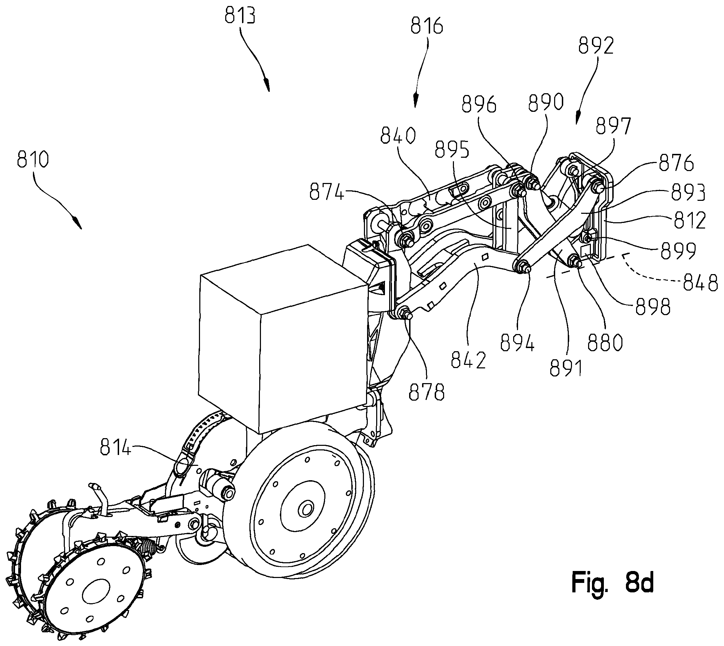

Referring now to Figs. 8a-8g, yet another embodiment of this disclosure, not forming part of the invention, is illustrated. More specifically, Figs. 8a-8g illustrate a planter assembly 813 having a row unit 810 movably coupled to a toolbar 812 that is selectively coupleable to the work machine 11 via a hitch 15. The row unit 810 has a plurality of components discussed herein coupled to a frame member 814. The components of the row unit 810 may include one or more of a cutting disk to open a furrow in the soil, a gauge wheel to set the depth of the cutting disk, a debris cleaner to clear debris along the cutting path, and a closing disk configured to close the furrow created by the cutting disk among other things. Further a commodity distribution system may selectively distribute a commodity, such as seed or fertilizer, in the opened furrow. This disclosure also contemplates that the row unit 810 may contain any other known components of a row unit as well or not contain one or more of the components discussed herein.

The frame member 814 of the row unit 810 may be movably coupled to the toolbar 812 through a linkage assembly 816. The linkage assembly 816 may couple the row unit 810 to the toolbar 812 such that the toolbar 812 can pull the row unit 810 while substantially maintaining an attitude of a row unit plane 850 and allowing the row unit 810 to move relative to the toolbar 812. In the planter assembly 813, the linkage assembly 816 has an upper link 840 pivotally coupled to the frame member 814, or a bracket thereof, at a first pivot 874 and pivotally coupled to an L-link 895 at an L-pivot 896. The L-link 895 may be L-shaped and pivotally coupled to a scissor spacer 892 at a first intermediate pivot 890 on one end and at a second intermediate pivot 894 at an opposite end. The scissor spacer 892 is pivotally coupled to the toolbar 812, or a bracket thereof, at a second pivot 876 and a fourth pivot 880 through a first scissor link 891 and a second scissor link 893. The scissor links 891, 893 may be pivotally coupled to the toolbar 812 or bracket thereof on one end, and the L-link 895 at the other, crossing over to opposite pivot location between the two as illustrated in Fig. 8a. More specifically, the first scissor link 891 may be pivotally coupled to the L-link 895 at the first intermediate pivot 896 on one end, and pivotally coupled to the toolbar 812 at the fourth pivot 880 on the other end. Similarly, the second scissor link 893 may be pivotally coupled to and extend from a second intermediate pivot 894 of the L-link 895 on one end, and pivotally coupled to the toolbar 812 at the second pivot 876. In this configuration, the pivot locations of the scissor links 891, 893 alternate between relatively above/below the other scissor link 891, 893 between the frame member 814 of the row unit 810 and the toolbar 812.

The linkage assembly 816 has a base bar or lower link 842 pivotally coupled to the frame member 814, or a bracket thereof, at a third pivot 878 and pivotally coupled to the L-link 895 of the scissor spacer 892 at the second intermediate pivot 894. In this configuration, the row unit 810 may move relative to the L-link 895 while substantially maintaining the attitude or orientation of a row unit plane 850 relative to a planter plane 848 defined by the orientation of the L-link 895. Further, the L-pivot 896 of the L-link 895 may be spaced from the first intermediate pivot 890. In this configuration, the orientation of the L-link 895 may be altered relative to the toolbar 812 as the scissor spacer 892 moves relative thereto.

In one aspect of this embodiment, an actuator 897 may be pivotally coupled to the toolbar 812 at an actuator pivot 899 on one end, and pivotally coupled to the L-link 895 at the first intermediate pivot 890 on the other end. In this configuration, the actuator 897 may selectively alter lengths to manipulate the scissor spacer 892 and change the orientation of the L-link 895 relative to the toolbar 812 as illustrated herein. The actuator 897 may be a hydraulic, electric, pneumatic, or any other selectively controllable linear actuator that has a changeable length. More specifically, a control system may selectively alter the length of the actuator 897 to change the attitude of the row unit plane 850 relative to the planter plane 848. As mentioned herein, the actuator 897 may alter the orientation of the L-link 895 relative to the toolbar 812. Further, the frame 814 of the row unit 810 may be substantially pivotally coupled to the L-link 895 via the four-bar linkage (i.e., the upper link 840 and lower link 842). Accordingly, altering the orientation of the L-link 895 relative to the toolbar 812 correspondingly alters the attitude of the row unit plane 850 relative to the planter plane 848. In one aspect of this disclosure, the linkage assembly 816 has a downforce actuator 860 that applies a springed tension force on the linkage assembly 816 to bias the row unit 810 towards the underlying surface. The downforce actuator 860 may extend from the first pivot 874 on one end to a portion of the lower link 842 of the linkage assembly 816 to apply a tension there between to provide a downforce to the row unit 810. The downforce actuator 860 may be a hydraulic actuator with an accumulator or the like, a pneumatic system providing a pressurized fluid to an actuator, a mechanical system having one or more spring, or any other known system that can apply a springed force to the linkage assembly 816 to bias the row unit 810 towards the underlying surface.

In one aspect of this disclosure, a toolbar position sensor 898 may be coupled to the toolbar 812 to identify changes to the orientation of the toolbar 812 to a control system. In this configuration, the angle of the toolbar bar L-link 895 may be altered to change the attitude of the row unit plane 850 when the toolbar position sensor 898 identifies a change in the attitude of the planter plane 848 to ensure the row unit 810 remains properly aligned with the underlying surface. The toolbar position sensor 898 may be any sensor able to identify the orientation of the toolbar 812. For example, the toolbar position sensor 898 may be an accelerometer, tilt sensor, LIDAR, or any other type of sensor that may be monitored by the control system to identify when the orientation of the toolbar 812 has changed. In this regard, the control system may store historical position data and determine relative movement of the orientation of the toolbar 812 compared to prior orientation readings from the toolbar position sensor 898. This allows the control system to manipulate the angle of the L-link 895 based on relative changes to the orientation of the toolbar 812 as identified through the toolbar position sensor 898. The control system may also identify when these relative changes in orientation of the toolbar 812 are consistent with an uphill entry, downhill entry, relative uphill condition, or relative downhill condition, among other things, and manipulate the angle of the L-link 895 accordingly.

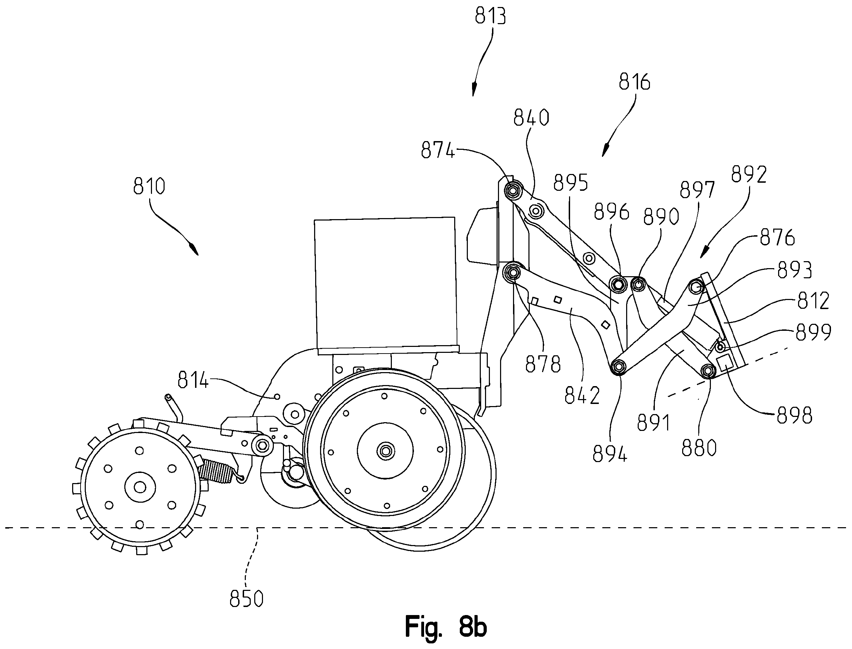

Referring now to Fig. 8b, the planter assembly 813 is illustrated entering an uphill feature in the underlying surface. In this configuration, the actuator 897 may shorten relative to the neutral position to draw the first intermediate pivot 890 towards the second pivot 876 to thereby alter the attitude of the row unit plane 850 relative to the planter plane 848 so the row unit 810 can remain properly aligned with the underlying surface as the planter assembly 813 enters the uphill feature.

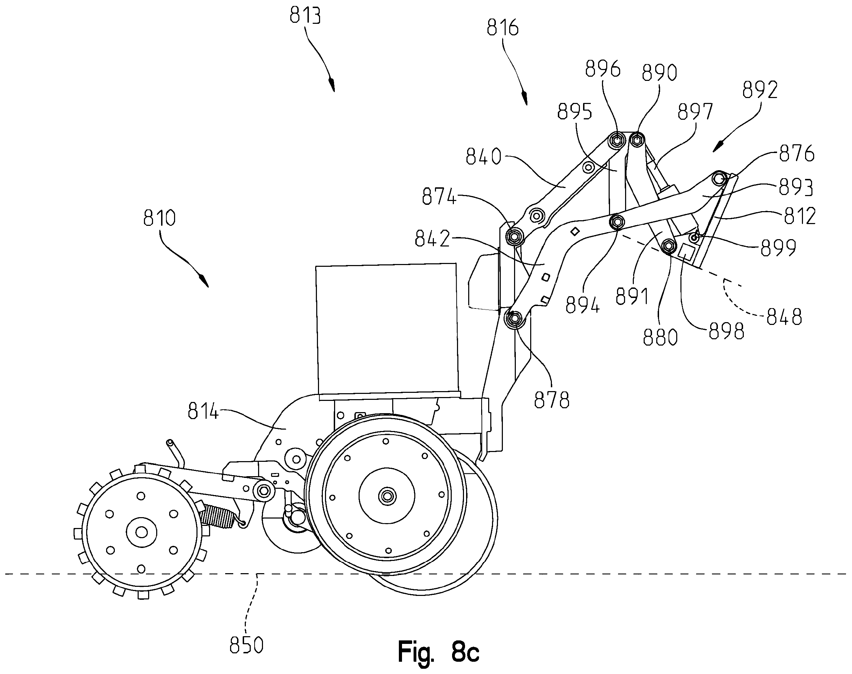

Similarly, referring now to Fig. 8c, the planter assembly 813 is illustrated entering a downhill feature in the underlying surface. In this configuration, the actuator 897 may lengthen relative to the neutral position to push the first intermediate pivot 890 away from the second pivot 876 to thereby alter the attitude of the row unit plane 850 relative to the planter plane 848 so the row unit 810 can remain properly aligned with the underlying surface as the planter assembly 813 enters the downhill feature.

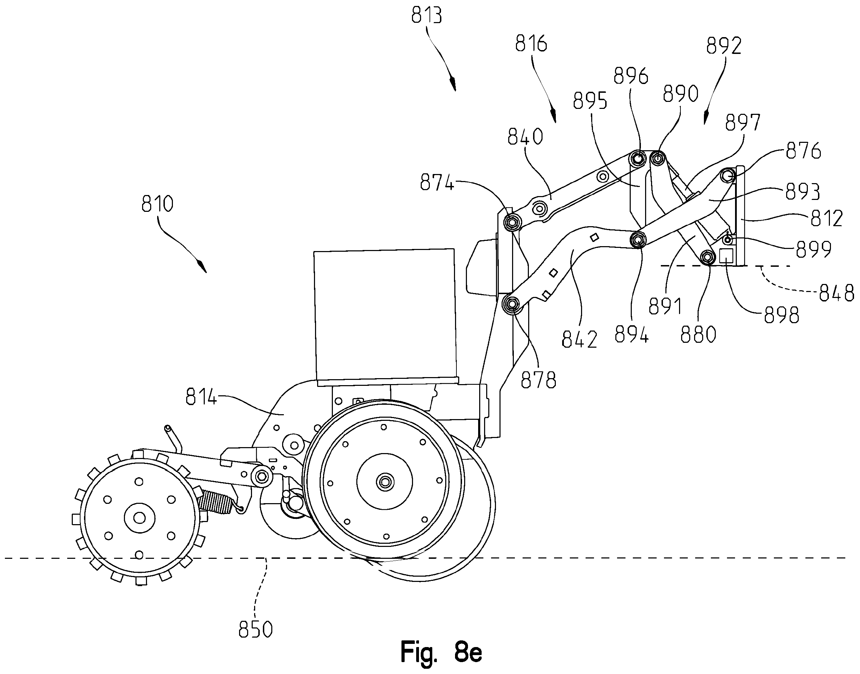

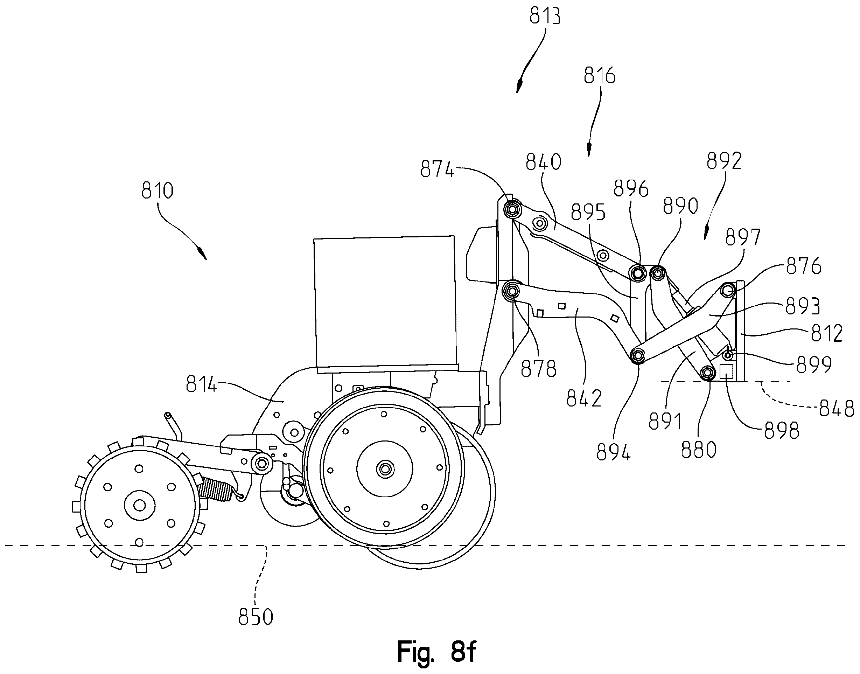

Figs. 8e and 8f illustrate situations wherein the row unit 810 is in a low spot relative to the toolbar 812 (Fig. 8e) and when the row unit 810 is in a high spot relative to the toolbar 812 (Fig. 8f). Relatively high and low spots in the underlying surface may be deviations in the underlying surface that are only along a focused section of the underlying surface and not consistent uphill or downhill changes. The linkage assembly 816 may respond as illustrated in Figs. 8e and 8f due to the specific lengths and pivot positions of the linkage assembly 816 and the angular orientation of the L-link 895 relative to the toolbar 812. More specifically, if the control system identifies a relative change in the underlying surface, it may not manipulate the actuator 897 and the attitude of the row unit plane 850 may remain aligned with the planter plant 848. Further, the relative change in the underlying surface may be addressed by the linkage assembly 816 allowing the row unit frame 814 to move relative to the toolbar 812 while substantially maintaining the attitude of the row unit plane 850.

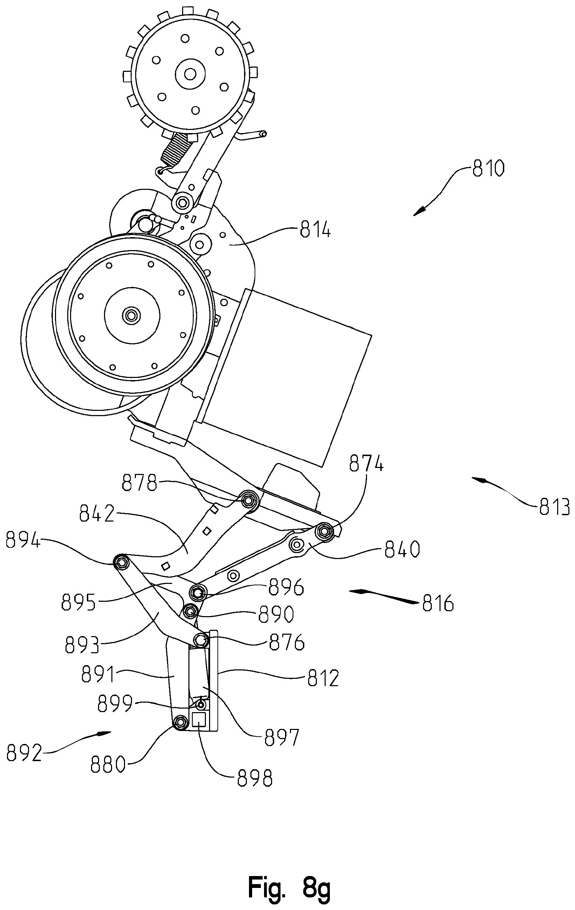

Referring now to Fig. 8g, yet another configuration of this embodiment is illustrated. Fig. 8g illustrates a travel configuration of the row unit 810. More specifically, the actuator 897 may selectively be oriented in a short length configuration that draws the first intermediate pivot 890 of the L-link 895 close to the second pivot 876 of the toolbar 812. The geometry of the L-link 895 is such that as the actuator 897 shortens, the L-link 895 pivots away from the toolbar 812 about the first intermediate pivot 890. The row unit 810 is correspondingly pivoted upward from the perspective of Fig. 8g such that the row unit 810 is positioned at least partially above the toolbar 812. The actuator 897 may selectively transition the row 810 into, and out of, the transport position through instructions from the control system.

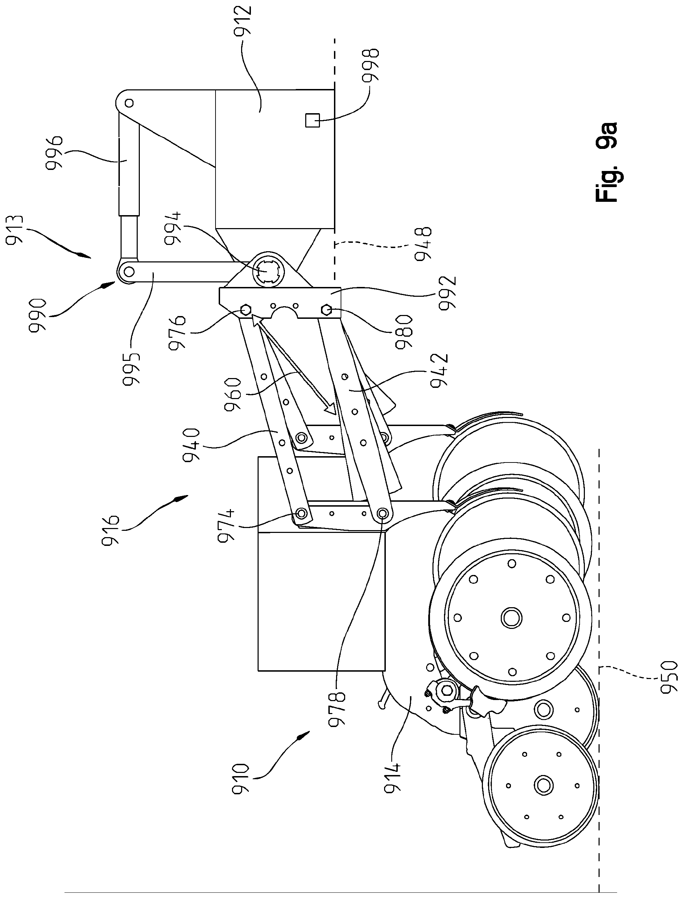

Referring now to Figs. 9a-9b, yet another embodiment of this disclosure, not forming part of the invention, is illustrated. More specifically, Figs. 9a-9d illustrate a planter assembly 913 having a row unit 910 movably coupled to a toolbar 912 that is selectively coupleable to the work machine 11 via a hitch 15. The row unit 910 has a plurality of components discussed herein coupled to a frame member 914. The components of the row unit 910 may include one or more of a cutting disk to open a furrow in the soil, a gauge wheel to set the depth of the cutting disk, a debris cleaner to clear debris along the cutting path, and a closing disk configured to close the furrow created by the cutting disk, among other things. Further, a commodity distribution system may selectively distribute a commodity, such as seed or fertilizer, in the opened furrow. This disclosure also contemplates that the row unit 910 may contain any other known components of a row unit as well or not contain one or more of the components discussed herein.

The frame member 914 of the row unit 910 may be movably coupled to the toolbar 912 through a linkage assembly 916. The linkage assembly 916 may couple the row unit 910 to a rockshaft assembly 990 rotationally coupled to the toolbar 912 such that the toolbar 912 can pull the row unit 910 while substantially maintaining an attitude of a row unit plane 950 and allowing the row unit 910 to move relative to the toolbar 912. In the planter assembly 913, the linkage assembly 916 has an upper arm 940 pivotally coupled to the frame member 914, or a bracket thereof, at a first pivot 974 and pivotally coupled to a rockshaft bracket 992 at a second pivot 976. Similarly, the linkage assembly 916 has a base bar or lower arm 942 pivotally coupled to the frame member 914, or a bracket thereof, at a third pivot 978 and pivotally coupled to the rockshaft bracket 992 at a fourth pivot 980 of the rockshaft bracket 992.

The rockshaft assembly 990 has one or more rockshaft bracket 992 coupled to a rockshaft 994 that extends there through. The rockshaft 994 may be pivotally coupled to the toolbar 912 or other frame portion of the planter assembly 913 so that rockshaft 994 can selectively rotate relative thereto. Further, the rockshaft bracket 992 may be rotationally fixed to the rockshaft 994 such that rotation of the rockshaft 994 causes similar rotation of the rockshaft bracket 992 about the axis of the rockshaft 994.

The rockshaft 994 may have a pivot arm 995 coupled thereto. The pivot arm 995 may be fixedly coupled to the rockshaft 994 such that rotation of the pivot arm 995 about the rockshaft axis causes rotation of the rockshaft 994 and the rockshaft bracket 992. The pivot arm 995 may be pivotally coupled to an actuator 996 at a distal end of the pivot arm 995. The actuator 996 may be coupled to the distal end of the pivot arm 995 at one end, and to the toolbar 912 or a bracket thereof an on the opposite end. Alternatively, the actuator 996 may be coupled to the pivot arm 995 and another frame component of the planter assembly 990 at the other end. Regardless, the actuator 996 may selectively change lengths to alter the orientation of the rockshaft bracket 992 relative to the toolbar 912 to thereby alter the attitude or orientation of the row unit plane 950.

In another aspect of this embodiment, a control system may selectively control the length of the actuator 996 and be in communication with a toolbar position sensor 998. The toolbar position sensor 998 may be coupled to the toolbar 912, or a bracket thereof, to identify the relative orientation of the toolbar 912. In one example, the control system may record historical orientations of the toolbar 912 with the toolbar position sensor 998 and compare historical orientations with a present orientation of the toolbar 912. The control system may identify when the planter assembly 913 enters an uphill or downhill feature by comparing the present values of the toolbar position sensor 998 with the historical data therefrom. When the control system identifies a change in the orientation of the toolbar 912 with the toolbar position sensor 998, the control system may selectively alter the length of the actuator 996 to change the attitude or orientation of the row unit plane 950 relative to the planter plane 948 to allow the components of the row unit 910 to better follow the underlying surface as the row unit 910 is pulled into the changed feature in the underlying surface.

In one aspect of this disclosure, the linkage assembly 916 has a downforce actuator 960 that applies a springed force on the linkage assembly 916 to bias the row unit 910 towards the underlying surface. The downforce actuator 960 may extend from the toolbar 912 on one end to the base bar 942 of the linkage assembly 916 to apply the downforce to the row unit 910. The downforce actuator 960 may be a hydraulic actuator with an accumulator or the like, a pneumatic system providing a pressurized fluid to an actuator, a mechanical system having one or more spring, or any other known system that can apply a springed force to the linkage assembly 916 to bias the row unit 910 towards the underlying surface.

In one example, the rockshaft 994 is manipulated to provide a modified attitude of the row unit plane 950 relative to the planter plane 948 as the planter assembly 913 enters an uphill feature in the underlying soil. In this configuration, as the work machine 11 enters the uphill feature, the toolbar 912 may begin to rotate as the toolbar 912 is pulled uphill by the work machine 11. The control system may identify the change in orientation of the toolbar 912 and planter plane 948 by monitoring the toolbar position sensor 998 as discussed herein. Further, once the control system identifies that the planter assembly 913 is entering an uphill feature, the control system may begin altering the length of the actuator 996 to thereby change the attitude of the row unit plane 950 relative to the planter plane 948 so the components of the row unit 910 can better follow the contours of the underlying surface as the row unit 910 is pulled into the uphill feature by the work machine 11. More specifically, the control system may shorten the actuator 996 to rotate the rockshaft bracket 992 of the linkage assembly 916 so the attitude or orientation of the row unit 910 remains aligned with the level portion of the underlying surface as the work machine 11 and other forward components of the planter assembly 913 enter the uphill feature. Once the control system identifies a consistent orientation of the planter plane 948 the control system may return the actuator 996 to a neutral length that is consistent with the row unit 910 and remaining portions of the planter assembly 913 being positioned over a substantially planar underlying surface.

Similarly, in another example of a modified attitude of the row unit plane 950 relative to the planter plane 948, the attitude of the row unit plane 950 may be altered when the planter assembly 913 enters a downhill feature in the underlying soil. In this configuration, as the work machine 11 enters the downhill feature, the toolbar 912 may begin to rotate as the toolbar 912 is pulled downhill by the work machine 11. The control system may identify the change in orientation of the toolbar 912 and corresponding planter plane 948 by monitoring the toolbar position sensor 998 as discussed herein. Further, once the control system identifies that the planter assembly 913 is entering a downhill feature, the control system may begin altering the length of the actuator 996 to thereby change the attitude of the row unit plane 950 relative to the planter plane 948 so the components of the row unit 910 can better follow the contours of the underlying surface as the row unit 910 is pulled into the downhill feature by the work machine 11. More specifically, the control system may lengthen the actuator 996 so the attitude or orientation of the row unit 910 remains aligned with the underlying surface as the work machine 11 and other forward components of the planter assembly 913 enter the downhill feature. Once the control system identifies a consistent orientation of the planter plane 948 the control system may return the actuator 996 to a neutral length.

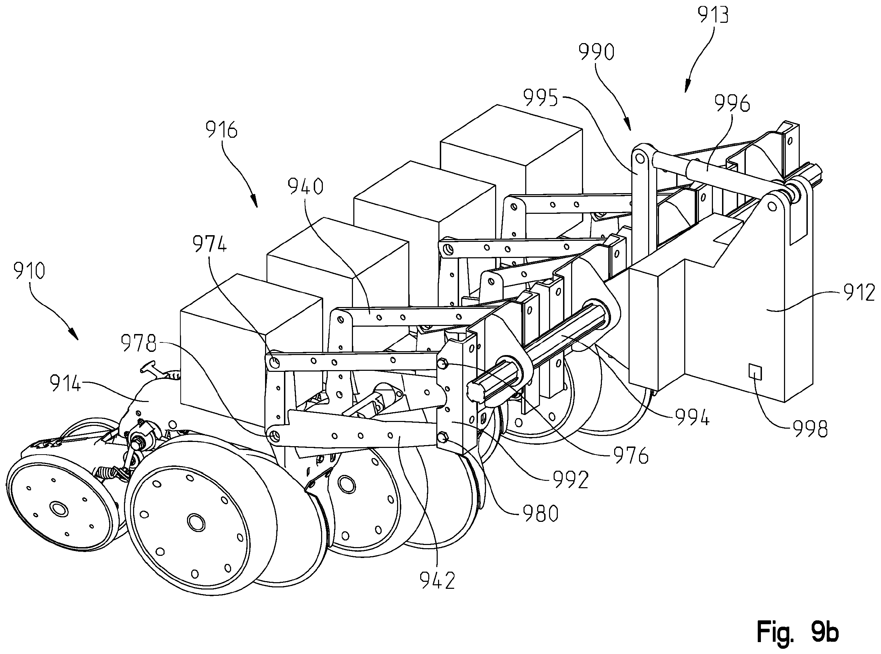

Referring now to Fig. 9b, a single rockshaft 994 and actuator 996 may be coupled to a plurality of row unit 910 to selectively alter the row unit plane 950 of each of the row units 910 at substantially the same time. Further still, there may be multiple sections of row units 910 across the width of the planter assembly 913 and each section may have a single rockshaft 994 that selectively modifies the row unit plane 950 of each of the row units 910 in that section. In this embodiment, the rockshaft 994 in each section may be independently rotated relative to the other sections or all of the sections may be manipulated to the same degree substantially simultaneously.

The actuator 996 may be hydraulic, pneumatic, mechanical, or any other linear actuator that is selectively resizable. In one aspect of this disclosure, the control system may selectively alter the length of the actuator 996 to change the attitude or orientation of the planter plane 948 as discussed herein. More specifically, the actuator 996 may be in fluid communication with an electro-hydraulic or electro-pneumatic system that can be manipulated by the control system to selectively provide fluid to, or exhaust fluid out of, the actuator 996 to change the length thereof. Alternatively the control system may be in communication with an electro-mechanical system to selectively alter the actuator 996 based on electrical signals provided to the actuator 996 through the control system. Regardless, the control system may selectively alter the length of the actuator 996 to change the attitude or orientation of the row unit plane 950 relative to the planter plane 948.

While a specific types of conventional row units having seed hoppers and a seed meter are described herein, the teachings of this disclosure can be applied to any agricultural configuration that uses a gauge wheel positioned adjacent an opener disk or any other furrow-creating member. Accordingly, while specific embodiments of row units are illustrated and discussed herein, the teachings of this disclosure can be applied to any agricultural device using a gauge wheel to set a furrow depth.

Further, while the term "uphill feature" and "downhill feature" are discussed herein, those terms are intended to be relative. For example, a work machine may be travelling along a consistent uphill grade at a steep angle and approach a change in the grade that remains uphill but at a lesser angle. Such a relative feature in the underlying surface may be identified by the control system as a "downhill feature" even though the work machine is travelling uphill relative to level during the downhill feature. Similarly, the work machine may be travelling down a steep downhill feature and approach a more mild downhill change in the underlying surface. This may also be interpreted as an "uphill feature" due to the relative change in grade even though the work machine is travelling downhill relative to level throughout the feature. Accordingly, this disclosure contemplates considering relative changes in the underlying surface by the control system when making determinations to alter the row unit plane relative to the planter plane in the embodiments discussed herein having that capability.

## Claims

1. A planter assembly (13) comprising:
a toolbar (12, 312) configured to be coupled to a work machine (11);
a row unit (10, 310) configured to selectively open a trench, deposit a commodity therein, and close the trench as the planter assembly is moved along an underlying surface; and
a linkage assembly (16, 316) coupling the row unit (10, 310) to the toolbar (12, 312) such that the row unit (10, 310) is movable relative to the toolbar (12, 312);
wherein, the linkage assembly (16, 316) alters a row unit attitude relative to the toolbar (12, 312) as the row unit (10, 310) moves relative thereto to enhance row unit ground following, wherein
the linkage assembly (316) comprises
a base bar (342) pivotally coupled to the toolbar (312) on one end and the row unit (310) on an opposite end;
**characterized in that** the linkage assembly further comprises:
a row unit bar (391) pivotally coupled to the row unit (310) on one end and an intermediate bar (390) on an opposite end; and
a toolbar bar (392) pivotally coupled to the toolbar (312) on one end and the intermediate bar (390) on an opposite end;
wherein, the intermediate bar (390) is pivotally coupled to the base bar (342) such that pivotal movement of the base bar (342) relative to the toolbar (312) causes the intermediate bar (390) to engage the row unit bar (391) and toolbar bar (392) to alter the row unit attitude.

## Patentansprüche

1. Pflanzmaschinenanordnung (13), die Folgendes umfasst:
einen Werkzeugträger (12, 312), der dazu ausgelegt ist, mit einer Arbeitsmaschine (11) gekoppelt zu sein;
eine Reiheneinheit (10, 310), die dazu ausgelegt ist, selektiv einen Graben zu öffnen, ein Gut darin abzulegen und den Graben zu schließen, während die Pflanzmaschinenanordnung entlang einer darunter liegenden Oberfläche bewegt wird; und
eine Gestängeanordnung (16, 316), die die Reiheneinheit (10, 310) derart mit dem Werkzeugträger (12, 312) koppelt, dass die Reiheneinheit (10, 310) relativ zum Werkzeugträger (12, 312) beweglich ist;
wobei die Gestängeanordnung (16, 316) eine Stellung der Reiheneinheit relativ zum Werkzeugträger (12, 312) verändert, während sich die Reiheneinheit (10, 310) relativ dazu bewegt, um eine Bodenanpassung der Reiheneinheit zu verbessern, wobei die Gestängeanordnung (316) Folgendes umfasst
eine Basisstange (342), die an einem Ende mit dem Werkzeugträger (312) und an einem gegenüberliegenden Ende mit der Reiheneinheit (310) schwenkbar gekoppelt ist;
**dadurch gekennzeichnet, dass** die Gestängeanordnung ferner Folgendes umfasst:
eine Reiheneinheitsstange (391), die an einem Ende mit der Reiheneinheit (310) und an einem gegenüberliegenden Ende mit einer Zwischenstange (390) schwenkbar gekoppelt ist; und
eine Werkzeugträgerstange (392), die an einem Ende mit dem Werkzeugträger (312) und an einem gegenüberliegenden Ende mit der Zwischenstange (390) schwenkbar gekoppelt ist;
wobei die Zwischenstange (390) derart mit der Basisstange (342) schwenkbar gekoppelt ist, dass eine Schwenkbewegung der Basisstange (342) relativ zum Werkzeugträger (312) bewirkt, dass die Zwischenstange (390) die Reiheneinheitsstange (391) und die Werkzeugträgerstange (392) in Eingriff nimmt, um die Stellung der Reiheneinheit zu verändern.

## Revendications

1. Ensemble semoir (13) comprenant :
une barre porte-outils (12, 312) configurée pour être accouplée à une machine de travail (11) ;
une unité de rangée (10, 310) configurée pour, de manière sélective, ouvrir une tranchée, y déposer un produit, et fermer la tranchée tandis que l'ensemble semoir est déplacé le long d'une surface sous-jacente ; et
une tringlerie (16, 316) accouplant l'unité de rangée (10, 310) à la barre porte-outils (12, 312) de sorte que l'unité de rangée (10, 310) est mobile par rapport à la barre porte-outils (12, 312) ;
la tringlerie (16, 316) modifiant une attitude de l'unité de rangée par rapport à la barre porte-outils (12, 312) tandis que l'unité de rangée (10, 310) se déplace par rapport à celle-ci afin d'améliorer le suivi du sol par l'unité de rangée, la tringlerie (316) comprenant
une barre de base (342) accouplée de manière pivotante à la barre porte-outils (312) sur une extrémité et à l'unité de rangée (310) sur une extrémité opposée ;
**caractérisé en ce que** la tringlerie comprend en outre :
une barre d'unité de rangée (391) accouplée de manière pivotante à l'unité de rangée (310) sur une extrémité et à une barre intermédiaire (390) sur une extrémité opposée ; et
une barre de barre porte-outils (392) accouplée de manière pivotante à la barre porte-outils (312) sur une extrémité et à la barre intermédiaire (390) sur une extrémité opposée ;
la barre intermédiaire (390) étant accouplée de manière pivotante à la barre de base (342) de sorte qu'un mouvement de pivotement de la barre de base (342) par rapport à la barre porte-outils (312) amène la barre intermédiaire (390) à venir en prise avec la barre d'unité de rangée (391) et la barre porte-outils (392) afin de modifier l'attitude de l'unité de rangée.
